# EUROPEAN PATENT APPLICATION

(11) **EP 2 796 918 A2**
(43) Date of publication of application: **29.10.2014**
(21) Application number: 14157414.5
(22) Date of filing: 03.03.2014
(51) Int. Cl.: G02B 21/36

(54) **Image processing apparatus and image processing method**

(30) Priority: 01.04.2013 JP 2013076303; 17.01.2014 JP 2014006561
(71) Applicant: Canon Kabushiki Kaisha, Tokyo 146-8501 (JP)
(72) Inventor: Takayama, Tomohiko, Tokyo, Tokyo 146-8501 (JP); Murakami, Tomochika, Tokyo, Tokyo 146-8501 (JP)
(74) Representative: TBK

(57) **Abstract**

An image processing apparatus includes: an adjusting section configured to detect, when a plurality of observation targets are included in a slide, regions of images of the observation targets from an image of the slide and continuously arrange the regions to thereby generate data of a reconfigured slide image in which arrangement of the observation targets is adjusted; and a display control section configured to display, on a display apparatus, an enlarged image corresponding to a part of a display region of the reconfigured slide image and change the enlarged image displayed on the display apparatus such that the display region moves on the reconfigured slide image according to a movement instruction.

## Description

### BACKGROUND OF THE INVENTION

### Field of the Invention

The present invention relates to a technique for supporting operation for displaying a part of a region of a specimen on a slide in enlargement and moving the display region to thereby observe the entire specimen.

### Description of the Related Art

A virtual slide system attracts attention with which it is possible to pick up an image of a specimen on a slide (preparation) using a digital microscope to acquire a virtual slide image, and observe the virtual slide image displayed on a monitor (Japanese Patent Application Laid-open No. 2011-118107).

There is known an image display technique for efficiently displaying a reduced image and an enlarged image even if image data is large-capacity image data (Japanese Patent Application Laid-open No. 2011-170480).

There is known a technique for, in displaying a cell image in an image server on a terminal apparatus, downloading only divided images of a region necessary for display from the image server to reduce time until display on the terminal apparatus (Japanese Patent Application Laid-open No. 2005-117640).

In a pathological diagnosis, in general, first, work called specimen observation (screening) for marking regions of interest while observing a low-magnification image of a slide and, thereafter, a detailed observation of the regions of interest is performed using a high-magnification image. In the specimen observation (the screening), in order to eliminate overlooking of a lesion part and the like, an observer is requested to comprehensively observe throughout an entire specimen region on the slide.

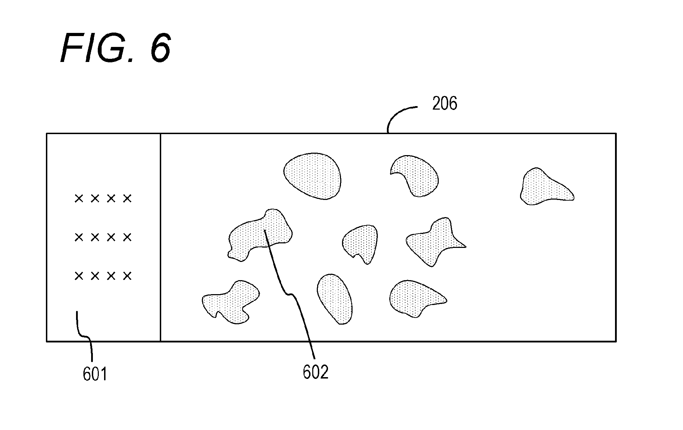

In a biopsy (a biological tissue observation) on the stomach, the liver, the prostate, the gallbladder, and the like, as shown in Fig. 6, a plurality of specimens are sometimes placed on one slide (hereinafter, single specimen is referred to as "individual specimen"). Since the specimens and the slide are manufactured by manual work, the shapes and the directions of respective individual specimens are non-uniform and the arrangement of the individual specimens is irregular. In the case of such a slide, it is necessary to screen an irregularly-arranged plurality of individual specimens in order and without omission. Therefore, the burden on the observer is heavy.

With the display technique disclosed in Japanese Patent Application Laid-open No. 2011-170480, it is possible to reduce a risk of overlooking an individual specimen. However, the burden of specimen observation (screening) in the individual specimen is not reduced. With the generating method and the display method for divided images disclosed in Japanese Patent Application Laid-open No. 2005-117640, it is possible to reduce a data amount related to communication. However, Japanese Patent Application Laid-open No. 2005-117640 does not refer to a generating method and a display method for divided images for reducing the burden of specimen observation (screening) of a plurality of individual specimens.

### SUMMARY OF THE INVENTION

Therefore, the present invention provides a technique capable of reducing the burden of specimen observation (screening) when there are a plurality of observation targets (e.g., individual specimens) on a slide.

The present invention in its first aspect provides an image processing apparatus as specified in claims 1 to 7.

The present invention in its second aspect provides an image processing apparatus as specified in claims 8 to 10.

The present invention in its third aspect provides an image processing apparatus as specified in claim 11.

The present invention in its fourth aspect provides an image processing method as specified in claim 12.

The present invention in its fifth aspect provides an image processing method as specified in claim 13.

The present invention in its sixth aspect provides an image processing method as specified in claim 14.

The present invention in its seventh aspect provides a non-transitory computer readable storage medium as specified in claim 15.

According to the present invention, when there are a plurality of observation targets on a slide, it is possible to reduce the burden of specimen observation (screening).

Further features of the present invention will become apparent from the following description of exemplary embodiments with reference to the attached drawings.

### BRIEF DESCRIPTION OF THE DRAWINGS

Fig. 1 is an overall diagram of the apparatus configuration of an image processing system;
Fig. 2 is a functional block diagram of an imaging apparatus in the image processing system;
Fig. 3 is a hardware configuration diagram of an image processing apparatus;
Fig. 4 is a functional block diagram of an image generation and control section of the image processing apparatus;
Fig. 5 is a schematic diagram showing the structure of hierarchical image data;
Fig. 6 is a schematic diagram showing a slide on which a plurality of individual specimens are placed;
Figs. 7A and 7B are schematic diagrams for explaining a display examples of an image presentation application;
Figs. 8A to 8D are schematic diagrams for explaining setting of a display region frame for an individual specimen;
Figs. 9A to 9E are schematic diagrams for explaining a specimen observation (screening) sequence;
Figs. 10A to 10C are schematic diagrams for explaining reconfiguration of specimen arrangement by translation;
Figs. 11A to 11C are flowcharts for explaining the reconfiguration of specimen arrangement by translation;
Fig. 12 is a schematic diagram for explaining another example of the reconfiguration of specimen arrangement by translation;
Figs 13A to 13F are schematic diagrams for explaining reconfiguration of specimen arrangement by rotation and translation;
Fig. 14 is a flowchart for explaining setting of a display region frame by rotation and translation;
Figs. 15A to 15D are schematic diagrams for explaining adjustment of a display region (bringing-close of individual specimens);
Fig. 16 is a flowchart for explaining the adjustment of the display region (the bringing-close of individual specimens);
Figs. 17A and 17B are schematic diagrams for explaining a result obtained by carrying out the adjustment of the display region (the bringing-close of individual specimens);
Figs. 18A and 18B are schematic diagrams for explaining separation of individual specimens;
Figs. 19A to 19C are schematic diagrams for explaining image file formats;
Figs. 20A and 20B are schematic diagrams for explaining effects by reconfiguration of specimen arrangement;
Figs. 21A and 21B are schematic diagrams for explaining a second display example of the image presentation application;
Figs. 22A and 22B are schematic diagrams for explaining a third display example of the image presentation application;
Fig. 23 is a schematic diagram for explaining setting of a display control mode in a second embodiment;
Fig. 24 is a functional block diagram of an image generation and control section of an image processing apparatus in the second embodiment;
Fig. 25 is a flowchart for explaining the setting of the display control mode in the second embodiment;
Figs. 26A to 26E are schematic diagrams for explaining display processing in display control modes in the second embodiment; and
Figs. 27A to 27D are flowcharts of the display processing in the display control modes in the second embodiment.

### DESCRIPTION OF THE EMBODIMENTS

Embodiments of the present invention are explained below with reference to the drawings.

### <First Embodiment>

### (Apparatus configuration of an image processing system)

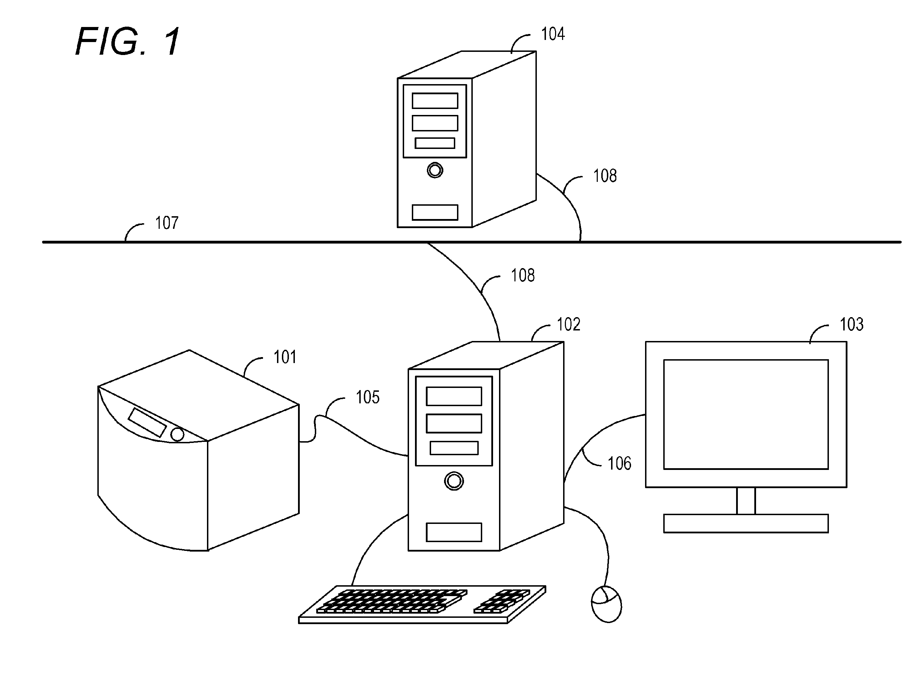

An image processing apparatus of the present invention can be used in an image processing system including an imaging apparatus and a display apparatus. The configuration of the image processing system is explained with reference to Fig. 1.

The image processing system is a system including an imaging apparatus (a digital microscope apparatus or a virtual slide scanner) 101, an image processing apparatus 102, a display apparatus 103, and a data server 104 and having a function of acquiring and displaying a two-dimensional image of an imaging target specimen. The imaging apparatus 101 and the image processing apparatus 102 are connected by a dedicated or general-purpose I/F cable 105. The image processing apparatus 102 and the display apparatus 103 are connected by a general-purpose I/F cable 106. The data server 104 and the image processing apparatus 102 are connected by a general purpose I/F LAN cable 108 via a network 107.

The imaging apparatus 101 is a virtual slide scanner having a function of picking up a plurality of two-dimensional images in different positions in a two-dimensional plane direction and outputting a digital image. For acquisition of the two-dimensional images, solid-state imaging devices such as a CCD (Charge Coupled Device) or a CMOS (Complementary Metal Oxide Semiconductor) is used. The imaging apparatus 101 can also be configured by, instead of the virtual slide scanner, a digital microscope apparatus configured by attaching a digital camera to an eyepiece section of a normal optical microscope.

The image processing apparatus 102 is an apparatus having, for example, a function of generating, from a plurality of original image data acquired from the imaging apparatus 101, according to a request from a user, data to be displayed on the display apparatus 103. The image processing apparatus 102 is configured by a general-purpose computer or a work station including hardware resources such as a CPU (central processing section), a RAM, a storage device, an operation section, and various I/Fs. The storage device is a large-capacity information storage device such as a hard disk drive. Programs and data for realizing respective kinds of processing explained below, an OS (operating system), and the like are stored in the storage device. Functions explained below are realized by the CPU loading necessary programs and data from the storage device to the RAM and executing the programs. The operation section is configured by a keyboard, a mouse, and the like and used by the user to input various instructions.

The display apparatus 103 is a display configured to display an image for observation obtained as a result of arithmetic processing by the image processing apparatus 102. The display apparatus 103 is configured by a liquid crystal display or the like.

The data server 104 is a server in which the image for observation obtained as a result of arithmetic processing by the image processing apparatus 102 is stored.

In an example shown in Fig. 1, the image processing system is configured by the four apparatuses, i.e., the imaging apparatus 101, the image processing apparatus 102, the display apparatus 103, and the data server 104. However, the configuration of the present invention is not limited to this configuration. For example, an image processing apparatus integrated with a display apparatus may be used. Functions of an image processing apparatus may be incorporated in an imaging apparatus. Functions of an imaging apparatus, an image processing apparatus, a display apparatus, and a data server can be realized by one apparatus. Conversely, functions of an image processing apparatus and the like may be divided and realized by a plurality of apparatuses.

### (Functional configuration of the imaging apparatus)

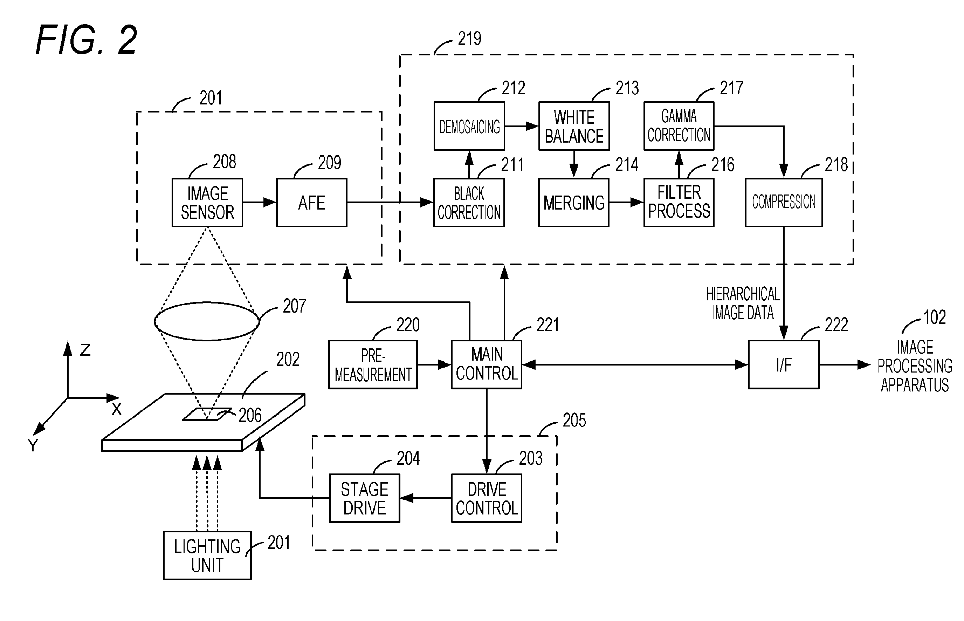

Fig. 2 is a block diagram showing the functional configuration of the imaging apparatus 101.

The imaging apparatus 101 schematically includes a lighting unit 201, a stage 202, a stage control unit 205, an imaging optical system 207, an imaging unit 210, a development processing unit 219, a pre-measurement unit 220, a main control system 221, and an external apparatus I/F 222.

The lighting unit 201 is means for uniformly irradiating light on a slide 206 arranged on the stage 202 and includes a light source, a lighting optical system, and a control system for light source driving. The stage 202 is controlled to be driven by the stage control unit 205 and capable of moving in three-axis directions of X, Y, and Z. The slide 206 is a member obtained by sticking a slice of a tissue on a slide glass and fixing the slide glass under a cover glass together with a mounting agent.

The stage control unit 205 includes a driving control system 203 and a stage driving mechanism 204. The driving control system 203 receives an instruction of the main control system 221 and performs driving control of the stage 202. A moving direction, a moving distance, and the like of the stage 202 are determined on the basis of position information and thickness information (distance information) of a specimen measured by the pre-measurement unit 220 and, when necessary, on the basis of an instruction from the user. The stage driving mechanism 204 drives the stage 202 according to an instruction of the driving control system 203.

The imaging optical system 207 is a lens group for imaging an optical image of a specimen of the slide 206 on an imaging sensor 208.

The imaging unit 210 includes the imaging sensor 208 and an analog front end (AFE) 209. The imaging sensor 208 is a one-dimensional or two-dimensional image sensor configured to photoelectrically convert a two-dimensional optical image into an electric physical quantity. For example, a CCD or a CMOS device is used as the imaging sensor 208. In the case of the one-dimensional sensor, scanning is electrically performed in a scanning direction and the stage 202 is moved in a sub-scanning direction to obtain a two-dimensional image. An electric signal having a voltage value corresponding to the intensity of light is output from the imaging sensor 208. When a color image is desired as a picked-up image, for example, a 1CCD image sensor attached with color filters of a Bayer array or a 3CCD image sensor of RGB only has to be used. The imaging unit 210 drives the stage 202 in XY-axis directions to thereby pick up divided images of a specimen.

The AFE 209 is a circuit configured to control the operation of the imaging sensor 208 and a circuit configured to convert an analog signal output from the imaging sensor 208 into a digital signal. The AFE 209 includes an H/V driver, a CDS (Correlated Double Sampling), an amplifier, an AD converter, and a timing generator. The H/V driver converts a vertical synchronization signal and a horizontal synchronization signal for driving the imaging sensor 208 into potential necessary for sensor driving. The CDS is a correlated double sampling circuit configured to remove noise of a fixed pattern. The amplifier is an analog amplifier configured to adjust a gain of an analog signal from which noise is removed by the CDS. The AD converter converts the analog signal into a digital signal. When an output in an imaging apparatus final stage is 8 bits, taking into account processing in later stages, the AD converter converts the analog signal into digital data quantized to about 10 bits to 16 bits and outputs the digital data. The converted sensor output data is called RAW data. The RAW data is subjected to development processing in the development processing unit 219 in a later stage. The timing generator generates a signal for adjusting timing of the imaging sensor 208 and timing of the development processing unit 219 in the later stage. When the CCD is used as the imaging sensor 208, the AFE 209 is indispensable. However, in the case of the CMOS image sensor capable of performing a digital output, the function of the AFE 209 is included in the sensor.

The development processing unit 219 includes a black correction section 211, a demosaicing processing section 212, a white balance adjusting section 213, an image merging processing section 214, a filter processing section 216, a gamma correction section 217, and a compression processing section 218.

The black correction section 211 performs processing for subtracting a background (black correction data obtained during light blocking) from values of pixels of RAW data.

The demosaicing processing section 212 performs processing for generating image data of RGB colors from RAW data of the Bayer array. The demosaicing processing section 212 interpolates values of peripheral pixels (including pixels of the same colors and pixels of other colors) in the RAW data to thereby calculate values of RGB colors of a pixel of attention. The demosaicing processing section 212 also executes correction processing (interpolation processing) for a defective pixel. When the imaging sensor 208 does not include color filters and a single color image is obtained, demosaicing processing is unnecessary. The demosaicing processing section 212 executes the correction processing for a defective pixel. The demosaicing processing is also unnecessary when the 3CCD imaging sensor 208 is used.

The white balance adjusting section 213 performs processing for adjusting gains of the RGB colors according to a color temperature of light of the lighting unit 201 to thereby reproduce a desirable white color.

The image merging processing section 214 performs processing for joining a plurality of divided image data divided and picked up by the imaging sensor 208 and generating large size image data in a desired imaging range. In general, a presence range of a specimen is wider than an imaging range that can be acquired in one imaging by an existing image sensor. Therefore, one two-dimensional image data is generated by joining divided image data. For example, when it is assumed that a range of 10 mm square on the slide 206 is imaged at resolution of 0.25 µm, the number of pixels on one side is forty thousand (10mm/0.25µm). A total number of pixels is a square of forty thousand, i.e., 1.6 billion. To acquire image data of 1.6 billion pixels using the imaging sensor 208 including ten million pixels, it is necessary to divide a region into one hundred sixty (1.6 billion/ten million) regions and perform imaging. As a method of joining a plurality of image data, for example, there are a method of aligning and joining the image data on the basis of position information of the stage 202 and a method of joining corresponding dots and lines of a plurality of divided images while associating the dots and the lines with one another. In the joining, the image data can be more smoothly joined by interpolation processing such as zero-th order interpolation, linear interpolation, or high-order interpolation.

The filter processing section 216 is a digital filter configured to realize suppression of a high-frequency component included in an image, noise removal, and resolution feeling emphasis.

The gamma correction section 217 executes processing for adding an opposite characteristic of a gradation representation characteristic of a general display device to an image and executes gradation conversion adjusted to a visual characteristic of a human according to gradation compression and dark part processing of a high brightness part. In this embodiment, for image acquisition for the purpose of a shape observation, gradation conversion suitable for merging processing and display processing in later stages is applied to image data.

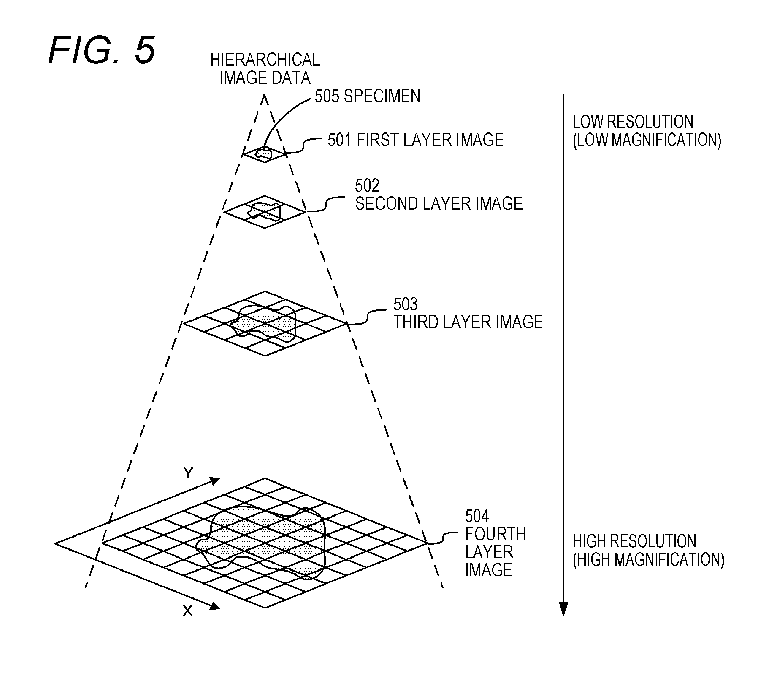

The compression processing section 218 executes encoding processing of compression performed for the purpose of efficiency of transmission of large-capacity two-dimensional image data and a capacity reduction in storage. As a compression method for a still image, standardized encoding systems such as JPEG (Joint Photographic Experts Group) and JPEG2000 and JPEG XR obtained by improving and developing JPEG are generally known. Reduction processing for two-dimensional image data is executed to generate hierarchical image data. The hierarchical image data is explained with reference to Fig. 5.

The pre-measurement unit 220 is a unit configured to perform prior measurement for calculating position information of a specimen on the slide 206, distance information to a desired focus position, and parameters for light amount adjustment due to specimen thickness. By acquiring information with the pre-measurement unit 220 before main measurement (acquisition of picked-up image data), it is possible to carry out imaging without waste. For acquisition of position information on a two-dimensional plane, a two-dimensional imaging sensor having resolution lower than the resolution of the imaging sensor 208 is used. The pre-measurement unit 220 grasps a position on an XY plane of a specimen from an acquired image. For acquisition of distance information and thickness information, a measurement device such as a laser displacement meter is used.

The main control system 221 has a function of performing control of the various units explained above. Control functions of the main control system 221 and the development processing unit 219 are realized by a control circuit including a CPU, a ROM, and a RAM. That is, programs and data are stored in the ROM, and the CPU executes the programs using the RAM as a work memory, whereby the functions of the main control system 221 and the development processing unit 219 are realized. As the ROM, a device such as an EEPROM or a flash memory is used. As the RAM, a DRAM device such as a DDR3 is used. The function of the development processing unit 219 may be replaced with an ASIC version of a dedicated hardware device.

The external apparatus I/F 222 is an interface for sending the hierarchical image data generated by the development processing unit 219 to the image processing apparatus 102. The imaging apparatus 101 and the image processing apparatus 102 are connected by a cable for optical communication. Alternatively, a general-purpose interface such as a USB or a GigabitEthernet (registered trademark) is used.

### (Hardware configuration of the image processing apparatus)

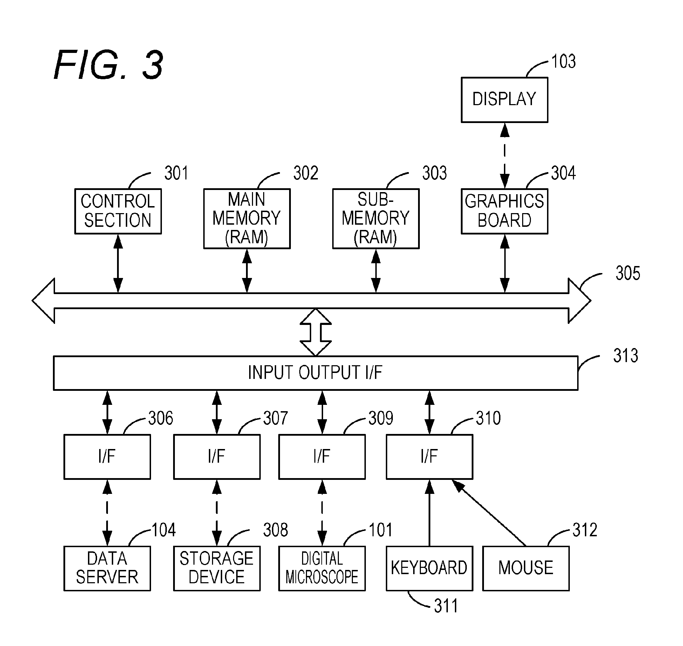

Fig. 3 is a block diagram showing the hardware configuration of the image processing apparatus 102 of the present invention.

As an apparatus that performs image processing, for example, a PC (Personal Computer) is used. The PC includes a control section 301, a main memory 302, a sub-memory 303, a graphics board 304, an internal bus 305 configured to connect the foregoing to one another, a LAN I/F 306, a storage device I/F 307, an external apparatus I/F 309, an operation I/f 310, and an input output I/F 313.

The control section 301 accesses the main memory 302, the sub-memory 303, and the like as appropriate according to necessity and collectively controls the entire blocks of the PC while performing various kinds of arithmetic processing. The main memory 302 and the sub-memory 303 are configured by RAMs (Random Access Memories). The main memory 302 is used as a work area or the like of the control section 301 and temporarily stores an OS, various programs being executed and various data subjected to processing such as generation of data for display. The main memory 302 and the sub-memory 303 are also used as storage areas for image data. With a DMA (Direct Memory Access) function of the control section 301, high-speed transfer of image data between the main memory 302 and the sub-memory 303 and between the sub-memory 303 and the graphics board 304 can be realized. The graphics board 304 outputs an image processing result to the display apparatus 103. The display apparatus 103 is, for example, a display device including liquid crystal, EL (Electro-Luminescence), or the like. A form of connecting the display apparatus 103 as an external apparatus is assumed. However, a PC integrated with a display apparatus may be assumed. For example, a notebook PC corresponds to the PC.

The data server 104, a storage device 308, the imaging apparatus 101, and a keyboard 311 and a mouse 312 are connected to the input output I/F 313 respectively via the LAN I/F 306, the storage device I/F 307, the external apparatus I/F 309, and the operation I/F 310.

The storage device 308 is an auxiliary storage device having fixedly stored therein an OS, programs, and firmware to be executed by the control section 301 and information such as various parameters. The storage device 308 is also used as a storage area for the hierarchical image data sent from the imaging apparatus 101. As the storage device 308, a magnetic disk drive such as an HDD (Hard Disk Drive), an SSD (Solid State Drive), or a semiconductor device such as a Flash memory is used.

As a connection device to the operation I/F 310, a pointing device such as the keyboard 311 or the mouse 312 is assumed. However, it is also possible to adopt a configuration in which a screen of the display apparatus 103 directly functions as an input device such as a touch panel. In that case, the touch panel can be integrated with the display apparatus 103.

### (Functional block configuration of the control section)

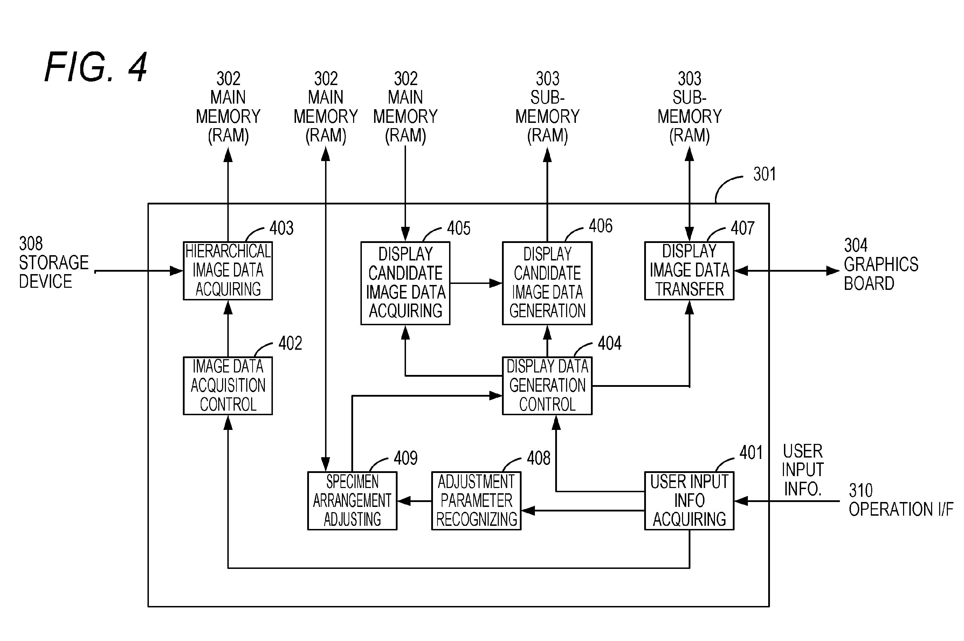

Fig. 4 is a block diagram showing the functional configuration of the control section 301 of the image processing apparatus 102.

The control section 301 includes a user input information acquiring section 401, an image data acquisition control section 402, a hierarchical image data acquiring section 403, and a display data generation control section 404. The control section 301 includes a display candidate image data acquiring section 405, a display candidate image data generating section 406, a display image data transfer section 407, an adjustment parameter recognizing section 408, and a specimen arrangement adjusting section 409.

The user input information acquiring section 401 acquires, via the operation I/F 310, instruction contents such as start and end of image display and scroll operation, switching, enlargement, reduction, and the like of a display image input by the user using the keyboard 311 and the mouse 312. For example, a magnification of an enlarged image for which the user performs a specimen observation (screening) and a specimen observation (screening) sequence are input to the user input information acquiring section 401 via the operation I/F 310.

The image data acquisition control section 402 controls, on the basis of user input information, readout of image data from the storage device 308 and expansion of the image data in the main memory 302. The image data acquisition control section 402 determines an image region predicted to be necessary for a display image with respect to various kinds of user input information such as start and end of image display and scroll operation, switching, enlargement, and reduction of the display image. The image data acquisition control section 402 predicts a change of a display region (an image region actually displayed on the display apparatus) and specifies an image region (a first display candidate region) where image data should be read in the memory 302. If the main memory 302 does not retain the image data of the first display candidate area, the image data acquisition control section 402 instructs the hierarchical image data acquiring section 403 to read out the image data of the first display candidate region from the storage device 308 and expand the image data in the main memory 302. The readout of the image data from the storage device 308 is time-consuming processing. Therefore, it is desirable to set the first display candidate region as wide as possible and suppress an overhead required for the processing.

The hierarchical image data acquiring section 403 performs, according to a control instruction of the image data acquisition control section 402, readout of image data of an image region from the storage device 308 and expansion of the image data in the main memory 302.

The display data generation control section 404 controls, on the basis of user input information, readout of image data from the main memory 302, a processing method for the image data, and transfer of the image data to the graphics board 304. The display data generation control section 404 predicts a change of a display region on the basis of various kinds of user input information such as start and end of image display and scroll operation, switching, enlargement, and reduction of a display image. The display data generation control section 404 specifies an image region (a display region) actually displayed on the display apparatus 103 and an image region (a second display candidate region) where image data should be read in the sub-memory 303. If the sub-memory 303 does not retain image data of the second display candidate region, the display data generation control section 404 instructs the display candidate image data acquiring section 405 to read out the image data of the second display candidate region from the main memory 302. Further, the display data generation control section 404 instructs the display candidate image data generating section 406 about a processing method for image data corresponding to a scroll request.

The display data generation control section 404 instructs the display image data transfer section 407 to read out image data of a display image region from the sub-memory 303. Compared with the readout of the image data from the storage device 308, the readout from the main memory 302 can be executed at high speed. Therefore, the second display candidate region may be set in a narrow range compared with the first display candidate region. That is, the relation of the sizes of the first display candidate region, the second display candidate region, and the display region is the first display candidate region ≥ the second display candidate region ≥ the display region.

The display candidate image data acquiring section 405 executes readout of image data of an image region of a display candidate from the main memory 302 according to a control instruction of the display data generation control section 404 and transfers the image data to the display candidate image data generating section 406. The display candidate image data generating section 406 executes expansion processing of the display candidate image data, which is compressed image data, and expands the image data in the sub-memory 303. The display image data transfer section 407 executes readout of image data of a display image region from the sub-memory 303 according to a control instruction of the display data generation control section 404 and transfers the image data to the graphics board 304. High-speed image data transfer between the sub-memory 303 and the graphics board 304 is executed by a DMA function.

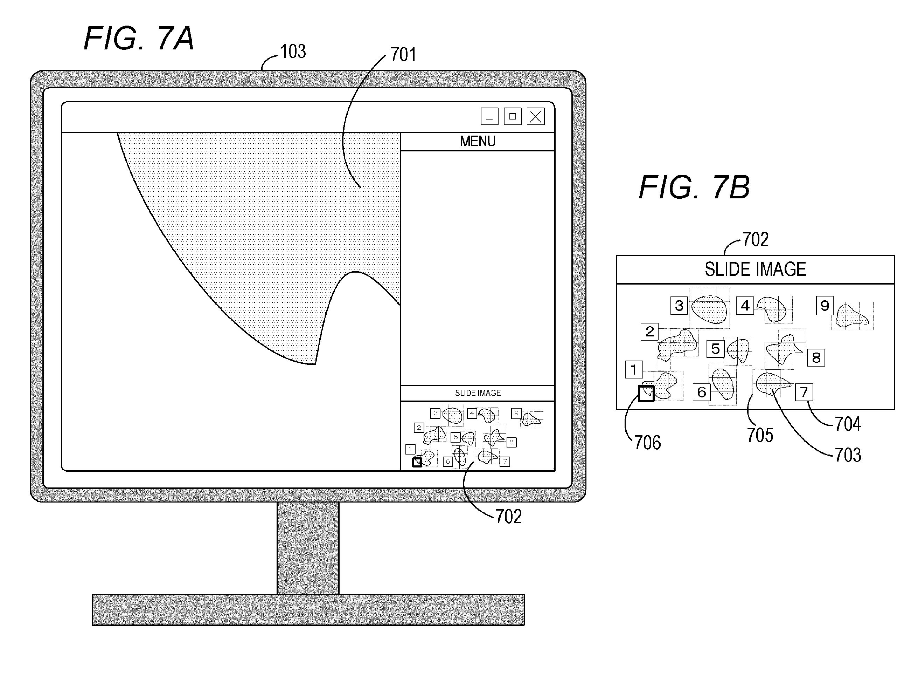

The adjustment parameter recognizing section 408 acquires a magnification of an enlarged image for which a specimen observation (screening) is performed and recognizes the size of a display region of the enlarged image. The enlarged image and the display region are explained with reference to Figs. 7A and 7B. The adjustment parameter recognizing section 408 recognizes a specimen observation (screening) sequence. As explained with reference to Figs. 7A, 7B, 9A to 9E, and 10A to 10C, the specimen observation (screening) sequence is information for defining observation order of a plurality of individual specimens, an observation start position of the individual specimen, and display order of an enlarged image of the individual specimen.

The specimen arrangement adjusting section 409 performs adjustment (reconfiguration) of specimen arrangement using image data of the slide 206 of the main memory 302 on the basis of the display region and the specimen observation (screening) sequence, which are recognition results in the adjustment parameter recognizing section 408. The adjustment of the specimen arrangement is processing for, when a plurality of individual specimens are included in one slide, the arrangement of the individual specimens such that regions of images of the individual specimens are continuously (sequentially) arranged. It is desirable to remove a region (a background portion) other than the images of the individual specimens. In the following explanation, a virtual slide having specimen arrangement adjusted by the specimen arrangement adjusting section 409 is referred to as "reconfigured slide (image)". In the specimen observation (the screening), as explained below, an enlarged image is updated such that display regions seemingly move in order on the reconfigured slide. This makes it easy to observe the plurality of individual specimens.

In this embodiment, the plurality of individual specimens are included in one slide. However, the present invention is not limited to this. The present invention can be applied if a plurality of observation targets spaced apart from one another are included in one slide. For example, the present invention can also be applied when a slice of a tissue is arranged on a slide as a specimen and only a plurality of characteristic portions (e.g., nuclei) in the tissue are set as observation targets.

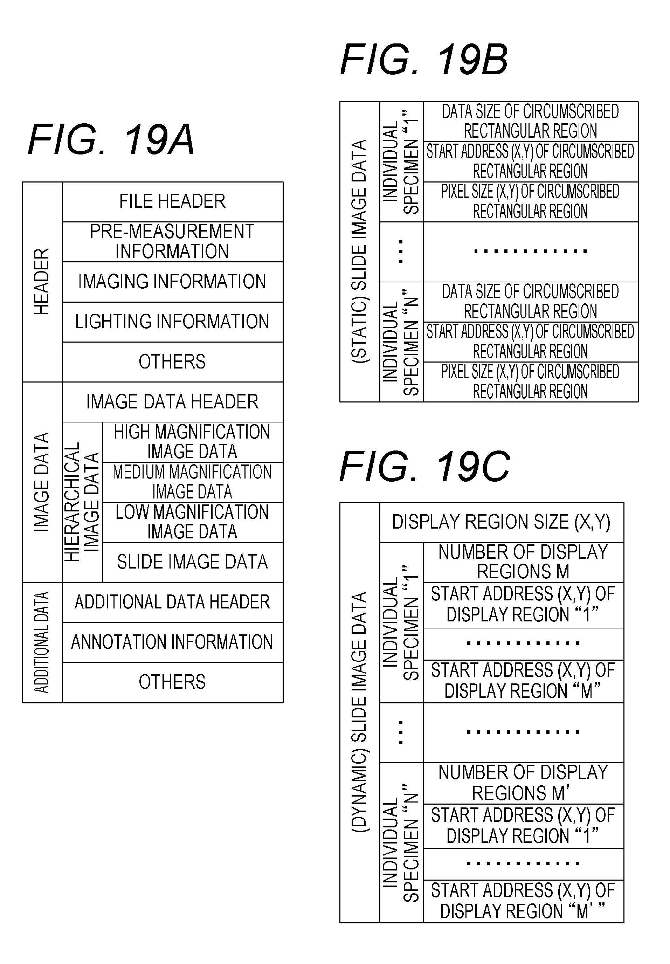

The specimen arrangement adjusting section 409 may actually rearrange and combine image data of the individual specimens to actually generate image data of the reconfigured slide. However, fixed processing time is required for processing of the image data and a storage capacity is also necessary to store the processed image data. Therefore, in this embodiment, as data of the reconfigured slide, data that defines a correspondence relation between the positions of the individual specimens in the reconfigured slide and positions in an actual slide is created (see Fig. 19C). In display control in the specimen observation (the screening), the display data generation control section 404 controls, referring to the correspondence relation, a reading position (a pointer) of image data that should be displayed as an enlarged image. With this method, it is possible to virtually realize the specimen observation (the screening) for the reconfigured slide.

The adjustment parameter recognizing section 408 and the specimen arrangement adjusting section 409 are functional blocks configured to perform recognition of a display region and a specimen observation (screening) sequence and adjustment of specimen arrangement, which are characteristics of this embodiment. The display data generation control section 404, the display candidate image data acquiring section 405, the display candidate image data generating section 406, and the display image data transfer section 407 are functional blocks configured to perform display control for updating display of an enlarged image according to a movement instruction for a display region.

### (Structure of hierarchical image data)

Fig. 5 is a schematic diagram showing the structure of hierarchical image data. According to differences in resolutions (the numbers of pixels), the hierarchical image data is configured by four layers of a first layer image 501, a second layer image 502, a third layer image 503, and a fourth layer image 504. A specimen 505 is a slice of a tissue. To make it easy to imagine a hierarchical structure, the sizes of the specimen 505 in the respective layers are clearly shown. The first layer image 501 is an image having the lowest resolution and is used for a thumbnail image and the like. The second layer image 502 and the third layer image 503 are images having medium resolutions and are used for a wide area observation of a virtual slide image and the like. The fourth layer image 504 is an image having the highest resolution and is used in observing the virtual slide image in detail.

The images of the layers are configured by collecting several compressed image blocks. For example, in the case of a JPEG compression format, the compressed image block is one JPEG image. The first layer image 501 is configured from one compressed image block, the second layer image 502 is configured from four compressed image blocks, the third layer image 503 is configured from sixteen compressed image blocks, and the fourth layer image 504 is configured from sixty-four compressed image blocks.

The differences in the resolutions of the images correspond to differences in optical magnifications during microscopy. The first layer image 501 is equivalent to microscopy at a low magnification and the fourth layer image 504 is equivalent to microscopy at a high magnification. For example, when the user desires to perform an observation at a high magnification, the user can perform a detailed observation corresponding to the high-magnification observation by displaying the fourth layer image 504.

### (Slide)

Fig. 6 is a schematic diagram showing a slide on which a plurality of individual specimens are placed. The slide 206 is a member obtained by sticking plurality of specimens on a slide glass and fixing the slide glass under a cover glass together with a mounting agent. A label 601 indicating an attribute of a specimen is present at an end of the slide 206. On the label 601, an identification number for patient identification, a segment of a specimen such as the stomach, the liver, the large intestine, or the small intestine, a name of a facility that created the slide, a comment serving as a reference of an opinion, and the like are described. Nine individual specimens are stuck to the slide 206. An individual specimen 602 indicates one of the individual specimens. For example, in a biopsy (a biological tissue observation) on the stomach or the liver, a plurality of individual specimens are sometimes placed on one slide as shown in Fig. 6.

### (Screen example of an image presentation application)

Fig. 7A is a diagram showing an example of a screen of an application for presenting virtual slide image. A program of an image presentation application (also called viewer application) is stored in the storage device 308 of the image processing apparatus 102. The control section 301 reads the program from the storage device 308, expands the program in a memory, and executes the program, whereby a function of the image presentation application is realized. Display data for image presentation is generated by the image presentation application using hierarchical image data and GUI data read from the storage device 308. The display data is output from the graphics board 304 to the display apparatus 103. Consequently, an application screen for image presentation is displayed on the display apparatus 103.

An execution method for the image presentation application is not limited to the example explained above. For example, the image processing apparatus 102 may include dedicated hardware for executing the function of the image presentation application. By attaching a function extension board mounted with the hardware to the image processing apparatus 102, the image processing apparatus 102 may be configured to have the function of executing the image presentation application. The image presentation application is not limited to be provided from the external storage device and may be provided by download through a network.

Fig. 7A shows an application screen displayed on a screen of the display apparatus 103. The application screen includes, besides a menu window, two windows for displaying an enlarged image 701 and a slide image 702. With this application, it is possible to perform operation for observing an entire specimen by displaying a part of a region of the specimen on a slide in enlargement and moving the display region. The application in this embodiment provides various functions explained below in order to support operation in a specimen operation (screening) of a slide including a plurality of individual specimens.

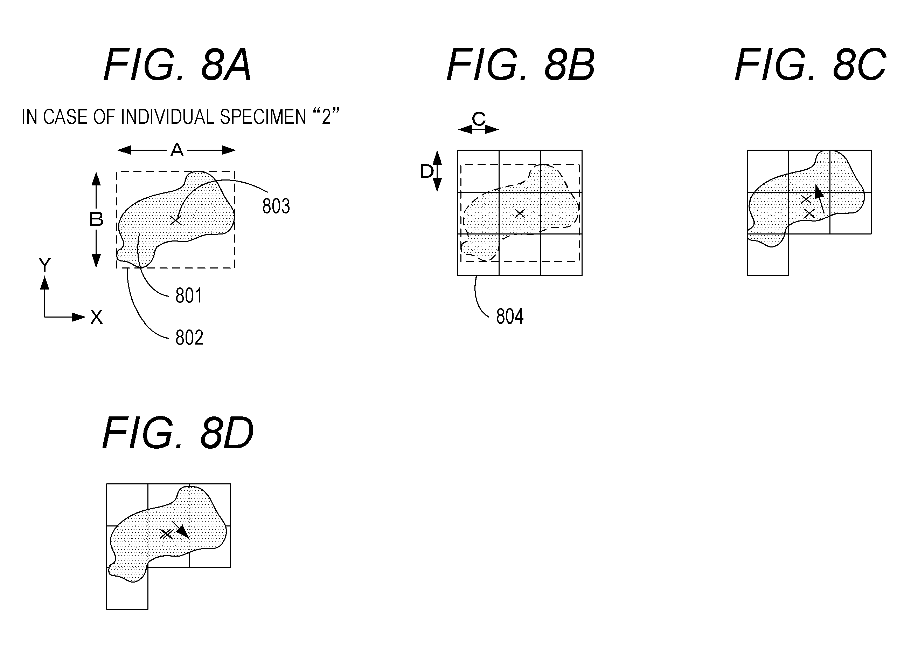

Fig. 7B is a diagram showing in detail a window on which the slide image 702 is displayed. The slide image 702 is an image of a region of the slide 206 other than the label 601. In the window on which the slide image 702 is displayed, all individual specimens (a plurality of specimens) stuck to the slide 206 can be checked. In the slide image 702, numbers indicating order of a specimen observation (screening) are given to all the individual specimens. For example, as a number 704 of an individual specimen, "7" is given to an individual specimen 703 seventh in the order of the specimen observation (the screening). Since there are the nine individual specimens, numbers "1" to "9" are given to the respective individual specimens. The user can arbitrarily set which numbers are given to which individual specimens. Alternatively, numbers may be automatically allocated on the basis of a predetermined rule of the image presentation application. In the slide image 702, a display region frame 705, which is a frame indicating the size of a display region of an enlarged image, is shown. One or a plurality of display region frames are set to each of the individual specimens to include the individual specimen. A setting method for the display region frame is explained below (see Figs. 8A to 8D). One of display region frames of an individual specimen "1" is highlighted by a thick frame 706. The thick frame 706 is a frame indicating a display region currently displayed on the display apparatus 103 as the enlarged image 701. The enlarged image 701 is a high definition (high resolution) image corresponding to a region of the thick frame 706 in the slide image 702 and is used for a detailed observation of a specimen.

### (Setting of a display region frame)

Figs. 8A to 8D are schematic diagrams for explaining setting of a display region frame for an individual specimen performed by the specimen arrangement adjusting section 409. Figs. 8A to 8D show a flow of setting a display region frame for an individual specimen using an individual specimen "2" as an example.

As shown in Fig. 8A, first, a circumscribed rectangular region 802 of an individual specimen 801 (the individual specimen "2") is set. The length in an X direction of the circumscribed rectangular region 802 is represented as A and the length in a Y direction is represented as B. A crossing point of diagonal lines of the circumscribed rectangular region 802 is set as a circumscribed rectangle center 803.

Subsequently, as shown in Fig. 8B, a minimum number of rectangular display region frames covering a circumscribed rectangular region (A×B) is determined. The length in the X direction of the display region frame is represented as C and the length in the Y direction is represented as D. The determination of the minimum number of display region frames is equivalent to calculating minimum M and N satisfying A≤C×M and B≤D×N using arbitrary positive numbers M and N. The minimum number of display region frames is M×N. M=3 and N=3. The minimum number of display region frames is nine.

As shown in Fig. 8C, the display region frames and the individual specimen 801 are relatively translated to search for arrangement in which the number of display region frames is minimized. For example, the circumscribed rectangular region (A×B) is arranged at four corners (upper left, upper right, lower left, and lower right) of a rectangular region ((C×M)×(D×N)) configured by the display region frames to search for arrangement in which the display region frames are reduced most. The individual specimen 801 is arranged at the upper left corner of the rectangular region ((C×M)×(D×N)) configured by the display region frames and the number of display region frames is reduced to seven.

Finally, as shown in Fig. 8D, margins in the display region are adjusted according to an optimization algorithm for maximizing a shortest distance from the outermost periphery of a region configured by the display region frames to the individual specimen 801. This processing is processing performed to reduce deviation of a filling state of the individual specimen 801 for each of the display region frames as much as possible. However, the processing may be omitted. A plurality of display region frames set by the processing explained above represent the positions and the sizes of a plurality of enlarged images used for a detailed observation of the individual specimen 801. By applying the processing shown in Figs. 8A to 8D to each of the individual specimens detected from a slide image, it is possible to associate a plurality of display region frames (i.e., enlarged images) with the individual specimens.

Figs. 8A to 8D show a setting method for display region frames by only the translation of the individual specimen 801. However, depending on the shape of the individual specimen 801, a minimum number of display region frames covering the individual frames are not always obtained. It is desirable to adopt, rather than the simple method explained above, an optimization algorithm for acquiring a minimum number of display region frames covering the individual specimen taking into account calculation resources, a calculation time, complexity of the shape of the individual specimen, and the like.

### (Specimen observation (screening) sequence in the individual specimen)

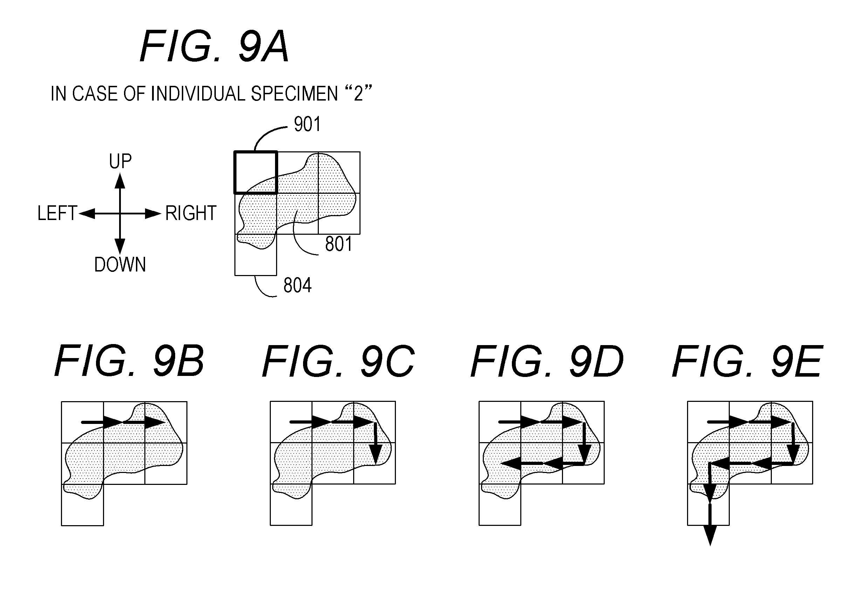

Figs. 9A to 9E are schematic diagrams for explaining a specimen observation (screening) sequence in the individual specimen performed by the specimen arrangement adjusting section 409. Figs. 9A to 9E show a setting flow of the specimen observation (screening) sequence using the individual specimen "2" as an example. Display order of a plurality of enlarged images (display region frames) configuring the individual specimen is set.

First, an observation start position 901 is set (Fig. 9A). The observation start position 901 is a display region frame of an enlarged image displayed first among a plurality of enlarged images configuring the individual specimen 801. In this embodiment, a display region frame present at the left end at the top among a plurality of display region frames of the individual specimen 801 is selected as the observation start position 901. It goes without saying that this is only an example and other display region frames such as a display region frame at the right end in the top may be selected as the observation start position.

Subsequently, the specimen arrangement adjusting section 409 sets display order from the left to the right with respect to the display region frames in a row same as the observation start position 901 (Fig. 9B). When the setting of the display order reaches the display region frame at the right end, the specimen arrangement adjusting section 409 moves to the display region frames in a lower row (Fig. 9C) and sets the display order from the right to the left (Fig. 9D). When the setting of the display order reaches the display region frame at the left end, the specimen arrangement adjusting section 409 moves to the display region frame in a lower row (Fig. 9E). The specimen arrangement adjusting section 409 repeats the processing shown in Figs. 9B to 9E until the display order is set for all the display region frames. Consequently, it is possible to set display order for a plurality of enlarged images configuring the individual specimen 801. The specimen observation (the screening) sequence can be independently set for each of the individual specimens.

In the image presentation application, switching of display the enlarged images in the individual specimen is controlled according to the determined specimen observation (screening) sequence. When the display of the enlarged images is switched, images may be discontinuously switched from a certain display region frame to the next display region frame or images may be continuously switched like scrolling.

### (Reconfiguration of specimen arrangement by translation)

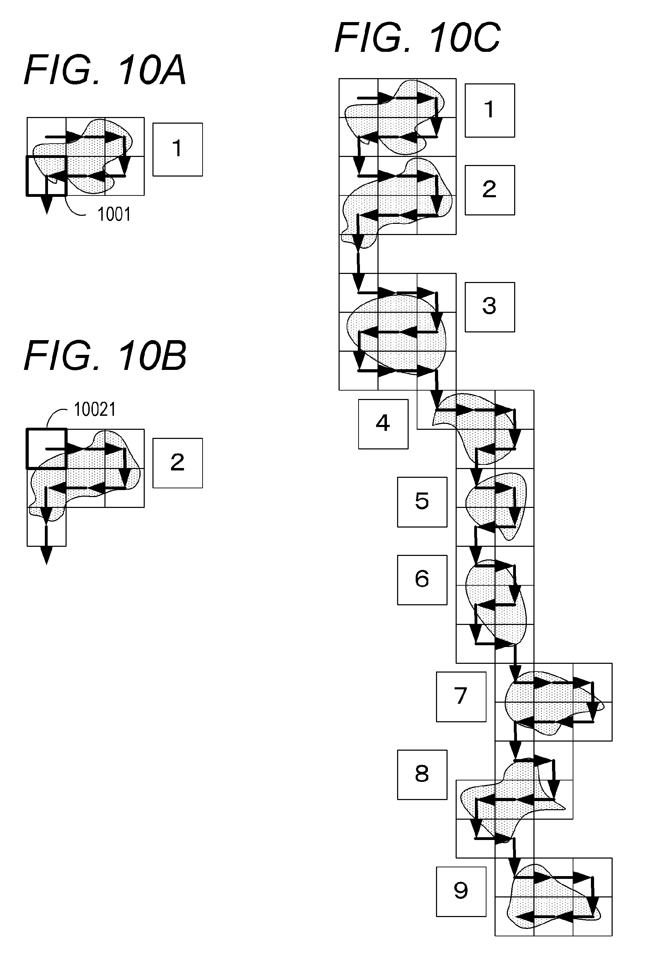

Figs. 10A to 10C are schematic diagrams for explaining reconfiguration of specimen arrangement by translation. On the basis of the observation order of a plurality of individual specimens, display region frames of the individual specimens, and a specimen observation (screening) sequence, the specimen arrangement adjusting section 409 carries out reconfiguration by translation of the individual specimens in a specimen image (an enlarged image).

In the reconfiguration by translation of the individual specimens in the specimen image (the enlarged image), the arrangement of the individual specimens is determined from a specimen observation (screening) sequence and display region frames of only two individual specimens adjacent to each other in observation order. In Fig. 10A, a specimen observation (screening) sequence and a display region frame of the individual specimen "1" are shown. In Fig. 10B, a specimen observation (screening) sequence and a display region frame of the individual specimen "2" are shown. In the individual specimens "1" and "2", the arrangement of the two individual specimens is determined such that a display region frame 1001 displayed last in the individual specimen "1" and a display region frame 1002 displayed first in the individual specimen "2" are joined. The connection of the individual specimen "1" and the individual specimen "2" is uniquely set.

Fig. 10C shows a result obtained by connecting the individual specimen "1" to the individual specimen "9" according to the order. Specimen arrangement of a reconfigured slide is schematically shown. In the reconfigured slide, a portion (a background portion) other than an image of the individual specimen is reduced. The distance between two individual specimens adjacent to each other on the reconfigured slide is shorter compared with the distance therebetween on an actual slide. Therefore, compared with observation of the actual slide, a moving distance and the number of times of movement of a display region decrease and useless display (display of the background portion) is reduced. Therefore, efficiency of a specimen observation can be improved. Moreover, in the reconfigured slide, a plurality of (nine) individual specimens are arranged in order (sequentially) according to given order. Concerning two individual specimens (referred to as first individual specimen and second individual specimen) adjacent to each other in the observation order, a last display region frame of the first individual specimen and a first display region frame of the second individual specimen are connected. Consequently, when the display region is moved, display of enlarged images is switched from an enlarged image of the first individual specimen to an enlarged image of the second individual specimen in order and directly. Therefore, it is easy to observe all the individual specimens without omission.

In practice, it is desirable to provide a certain degree of an overlapping region in display region frames adjacent to each other in the observation order. This is because, when the display region frames are switched, it is easy to grasp a correspondence relation between enlarged images before and after the switching. However, it is not indispensable to provide the overlapping regions. For example, it is unnecessary to provide the overlapping region when the enlarged images are gradually switched by scrolling rather than being discontinuously switched.

### (Flow of reconfiguration of specimen arrangement by translation)

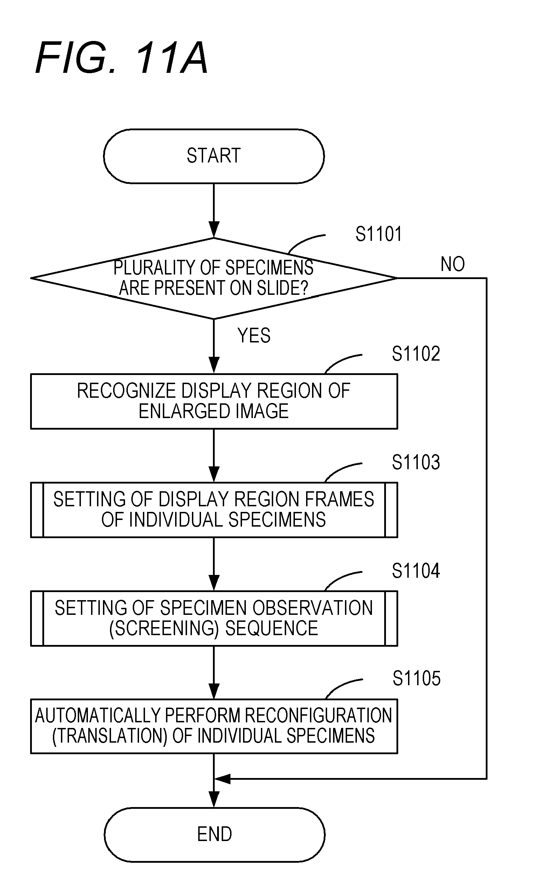

Fig. 11A is a flowchart for explaining a flow of reconfiguration of specimen arrangement in this embodiment.

In step S1101, the specimen arrangement adjusting section 409 determines whether a plurality of individual specimens are present on the slide 206. This step is executed in pre-measurement. For example, information concerning the number of individual specimens is clearly written or electronically written on the label 601 during creation of the slide 206. In the pre-measurement, the information of the label 601 is written and the number of individual specimens is determined. The number of individual specimens may be determined in image processing using an image of the slide 206 picked up in the pre-measurement.

In step S1102, the specimen arrangement adjusting section 409 recognizes the size of a display region of an enlarged image. This processing is processing for calculating the size on the slide image 702 of a region displayed as the enlarged image 701 shown in Fig. 7A. The size of a region displayable as the enlarged image 701 changes according to screen resolution of the display apparatus 103, a window size of the image presentation application, a display magnification of the enlarged image 701, and the like. Therefore, the recognition processing in step S1102 is necessary. Specifically, the user input information acquiring section 401 acquires a magnification of the enlarged image 701 set by the user using the keyboard 311 or the mouse 312. The adjustment parameter recognizing section 408 calculates the size of the display region from the magnification of the enlarged image 701 and the window size. The recognized size of the display region is reflected as the size of a display region frame in the next step S1103.

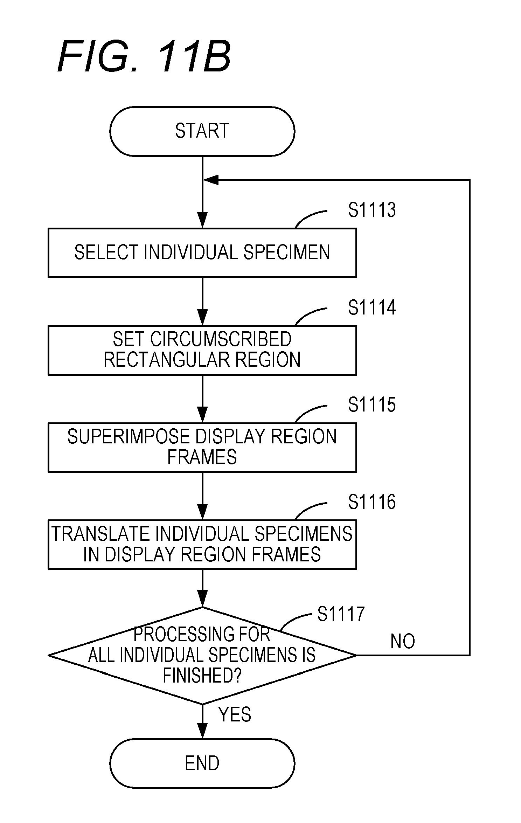

In step S1103, the specimen arrangement adjusting section 409 performs setting of display region frames of individual specimens. Details of S1103 are explained below with reference to Fig. 11B.

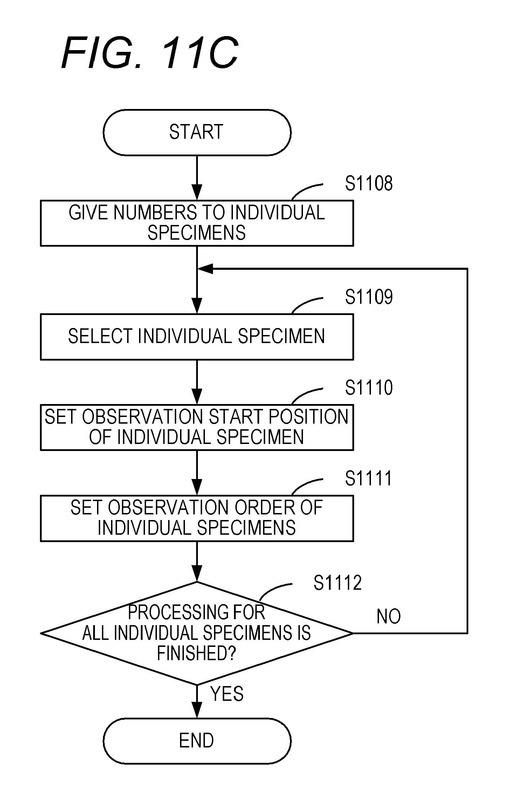

In step S1104, the specimen arrangement adjusting section 409 performs setting of a specimen observation (screening) sequence. The specimen observation (screening) sequence is set according to observation order of a plurality of individual specimens, an observation start position of an image of an individual specimen and observation order of the display region of the image of the individual specimen. Details of S1104 are explained below with reference to Fig. 11C.

In step S1105, the specimen arrangement adjusting section 409 automatically performs reconfiguration (translation) of arrangement of individual specimens. The specimen arrangement adjusting section 409 selects two individual specimens adjacent to each other in the observation order and determines relative arrangement of the two individual specimens on the basis of a specimen observation (screening) sequence and display region frames of only the two individual specimens. The specimen arrangement adjusting section 409 performs reconfiguration (translation) of all the individual specimens by repeating the same procedure for all combinations of individual specimens adjacent to each other in the observation order (see Fig. 10C).

According to the processing steps explained above, it is possible to execute reconfiguration (adjustment of arrangement) of a plurality of individual specimens. When the user changes the magnification of the enlarged image 701 or changes the window size, the processing from step S1102 is executed at any time.

Fig. 11B is a flowchart showing details of the setting of the display region frames of the individual specimens in step S1103. In step S1113, the specimen arrangement adjusting section 409 detects a region of an image of an individual specimen from an image of a slide and selects the individual specimen as an individual specimen on which the following processing is executed. In step S1114, the specimen arrangement adjusting section 409 sets a circumscribed rectangular region for the selected individual specimen (see Fig. 8A). In step S1115, the specimen arrangement adjusting section 409 superimposes a minimum number of display region frames on the circumscribed rectangular region set in step S1114 (see Fig. 8B). In step S1116, the specimen arrangement adjusting section 409 translates the individual specimen in the display region frames (see Figs. 8C and 8D). Consequently, a reduction of the display region frames and margin adjustment for the individual specimen in the display region frames are performed. In step S1117, the specimen arrangement adjusting section 409 determines whether the steps S1113 to S1116 are executed on all the individual specimens. If the steps S1113 to S1116 are executed on all the individual specimens, the specimen arrangement adjusting section 409 ends the processing. According to the processing steps explained above, it is possible to set the image region frames for the respective individual specimens.

Fig. 11C is a flowchart showing details of the setting of the specimen observation (screening) sequence. In step S1108, the specimen arrangement adjusting section 409 gives numbers indicating order of the specimen observation (screening) to all individual specimens. The user may arbitrarily set which numbers are given to which individual specimens or numbers may be automatically allocated on the basis of a rule. In step S1109, the specimen arrangement adjusting section 409 selects one individual specimen on which the following processing is executed. In step S1110, the specimen arrangement adjusting section 409 performs setting of an observation start position of the selected individual specimen. For example, in Fig. 9A, a display region frame present at the left end at the top among display region frames covering an individual specimen is set in the observation start position 901. In step S1111, the specimen arrangement adjusting section 409 performs setting of display order of display region frames in the individual specimen. A method of setting the display order is as explained with reference to Figs. 9B to 9E. In step S1112, the specimen arrangement adjusting section 409 determines whether the steps S1109 to S1111 are executed on all the individual specimens. If the steps S1109 to S1111 are executed on all the individual specimens, the specimen arrangement adjusting section 409 ends the processing. According to the processing steps explained above, it is possible to set the specimen observation (screening) sequence for the individual specimens.

### (Another example of the reconfiguration of the specimen arrangement by the translation)

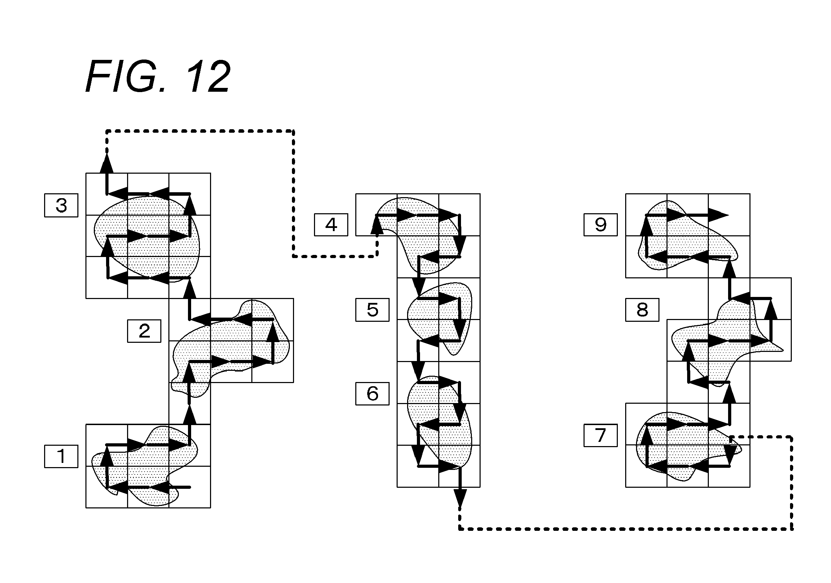

Fig. 12 is a schematic diagram for explaining another example of the reconfiguration of the specimen arrangement by the translation.

Compared with the example explained above (see Fig. 10C), setting of display region frames in an individual specimen is the same but setting of an observation start position and setting of display order concerning the individual specimens "1", "2", "3", "7", "8", and "9" are different. Setting of an observation start position and setting of display order concerning the individual specimens "4", "5", and "6" are the same as those in the example.

The setting of an observation start position and the setting of display order concerning the individual specimens "1", "2", "3", "7", "8", and "9" are explained. The observation start position is set in a display region frame present at the right end in the bottom among display region frames covering an individual specimen. Concerning the display order, a sequence for moving from the display region frame in the observation start position to the left, moving to an upper row after reaching a display region frame at the left end, moving from the left to the right, and moving to an upper row after reaching the right end is repeated until the display order is set for all the display region frames.

The specimen observation (screening) sequence in the individual specimens can be independently set in the respective individual specimens. Different specimen observation (screening) sequences are applied to a set of the individual specimens "1", "2", "3", "7", "8", and "9" and a set of the individual specimens "4", "5", and "6".

In the reconfiguration of specimen arrangement by the translation, the arrangement of the individual specimens is adjusted by a specimen observation (screening) sequence and display region frames of only two individual specimens adjacent to each other in observation order. Therefore, as shown in Fig. 12, a display region frame observed last in the individual specimen "3" and a display region frame observed first in the individual specimen "4" are connected. However, the individual specimen "3" and the individual specimen "4" after the connection cannot be shown on the same plane. The same holds true concerning connection of the individual sample "6" and the individual sample "7". Such a connection relation cannot be represented by a two-dimensional plane but can be represented by a phase space like the Moebius strip. In Fig. 12, the connection that cannot be represented by the two-dimensional plane is indicated by a dotted line arrow.

In the example of the reconfiguration shown in Fig. 12, for example, the individual specimen "1" to the individual specimen "3" can be locally represented by a two-dimensional image. However, in order to connect, for example, the individual specimen "3" and the individual specimen "4", an overall image of a plurality of individual specimens is represented by a phase space (rather than a two-dimensional plane). In this embodiment, rearrangement of an image is virtually realized by a method of controlling a reading position of image data using data that defines a correspondence relation between a position in a reconfigured slide and a position in an actual slide, rather than a method of actually generating reconfigured image data. Therefore, a connection relation in the phase space shown in Fig. 12 can be realized without a problem. An observer who performs the specimen observation (the screening) only looks at a displayed enlarged image and can attain an object if the observer can only observe all enlarged images in order without omission. Therefore, there is no particular problem even if reconfigured specimen arrangement cannot be represented by a two-dimensional plane.

### (Reconfiguration of specimen arrangement by rotation and translation)

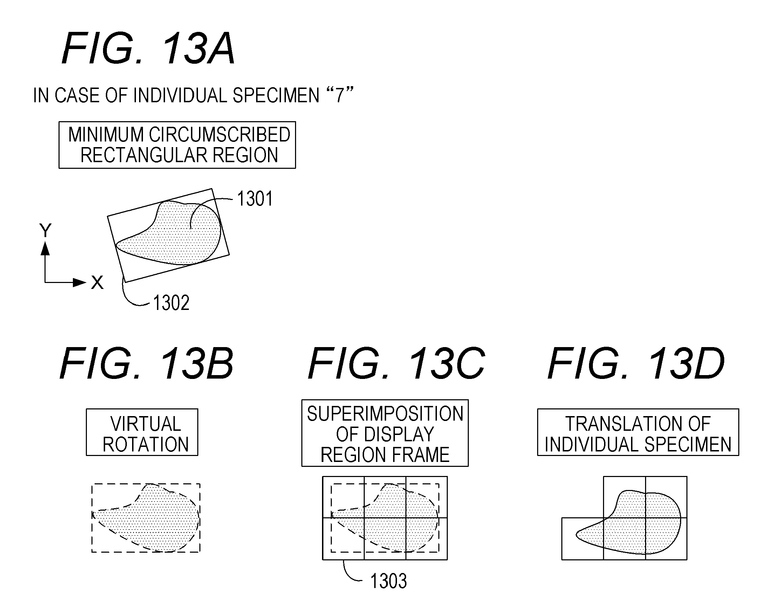

Figs. 13A to 13F are schematic diagrams for explaining reconfiguration of specimen arrangement by rotation and translation.

Figs. 13A to 13D are schematic diagrams for explaining setting of display region frames with rotation of an individual specimen taken into account. A flow until setting of display region frames in an individual specimen is shown using the individual specimen "7" as an example.

In Fig. 13A, a minimum circumscribed rectangular region 1302 of an individual specimen 1301 (the individual specimen "7") is set.

In Fig. 13B, the individual specimen 1301 and the minimum circumscribed rectangular region 1302 are virtually integrally rotated such that sides of the minimum circumscribed rectangular region 1302 are parallel to the X axis and the Y axis. Besides a shape shown in Fig. 13B, shapes obtained by further rotating a figure shown in Fig. 13B by 90 degrees, 180 degrees, and 270 degrees are conceivable. However, arbitrary one rotation angle may be selected. Since a final rotation angle is not selected, it is unnecessary to generate an image obtained by actually rotating an individual specimen. The individual specimen only has to be virtually rotated for the purpose of calculation.

In Fig. 13C, a minimum circumscribed rectangular region is covered with a minimum number of display region frames.

In Fig. 13D, the individual specimen 1301 is translated to reduce display region frames. The individual specimen 1301 is arranged at the lower right corner of a rectangular region configured by display region frames. The number of display region frames is five. Further, a margin in a display region is adjusted by an optimization algorithm for maximizing a minimum distance from an outermost periphery of the region configured by the display region frames to the individual specimen 1301.

Figs. 13A to 13D show a setting method for display region frames by rotation and translation of the individual specimen 1301. However, depending on the shape of the individual specimen 1301, a minimum number of display region frames covering the individual specimen is not always obtained. Instead of the simple method explained above, an optimization algorithm for acquiring a minimum number of display region frames covering an individual specimen may be selected. An algorithm to be adopted only has to be determined taking into account calculation resources, a calculation time, complexity of the shape of the individual specimen, and the like.

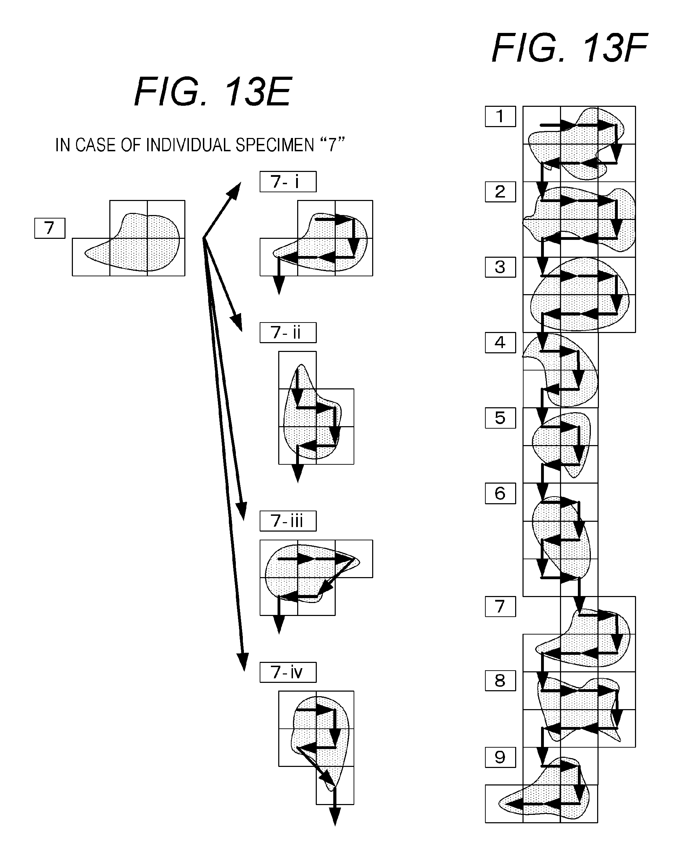

In Fig. 13E, rotation of the individual specimen 1301 with a specimen observation (screening) sequence taken into account is explained. As explained with reference to Fig. 13B, four kinds of rotation are conceivable as the rotation of the individual specimen 1301. The individual specimen 1301 rotated by the four kinds of rotation are respectively represented as individual specimens "7-i", "7-ii", "7-iii", and "7-iv". Rotation angles of the individual specimens are different from one another by 90 degrees. The specimen observation (screening) sequence is the same as the sequence explained with reference to Figs. 9A to 9E. When focusing on the individual specimens "7-iii" and "7-iv", oblique movement occurs between display region frames. In order to retain continuity in an individual specimen being observed as much as possible, that is, in order to continuously perform a specimen observation (screening) as much as possible only by left and right movement and downward movement, the rotations of the individual specimen "7-iii" and "7-iv" are excluded from selection candidates. Concerning the rotation of the individual specimen "7", the individual specimen "7-i" or "7-ii" is selected. Any one of the rotations of "7-i" and "7-ii" may be adopted. For example, the rotation with less change in a moving direction may be adopted or the rotation closer to an actual direction of a specimen may be adopted.

Fig. 13F shows the individual specimen "1" to the individual specimen "9" are connected and reconfigured according to the procedure explained above. Concerning the individual specimen "7", the rotation indicated by "7-i" in Fig. 13E is adopted. The enlarged image 701 shown in Fig. 7A is an image obtained by enlarging any one of display region frames shown in Fig. 13F.

### (Setting of display region frames by rotation and translation of an individual specimen)

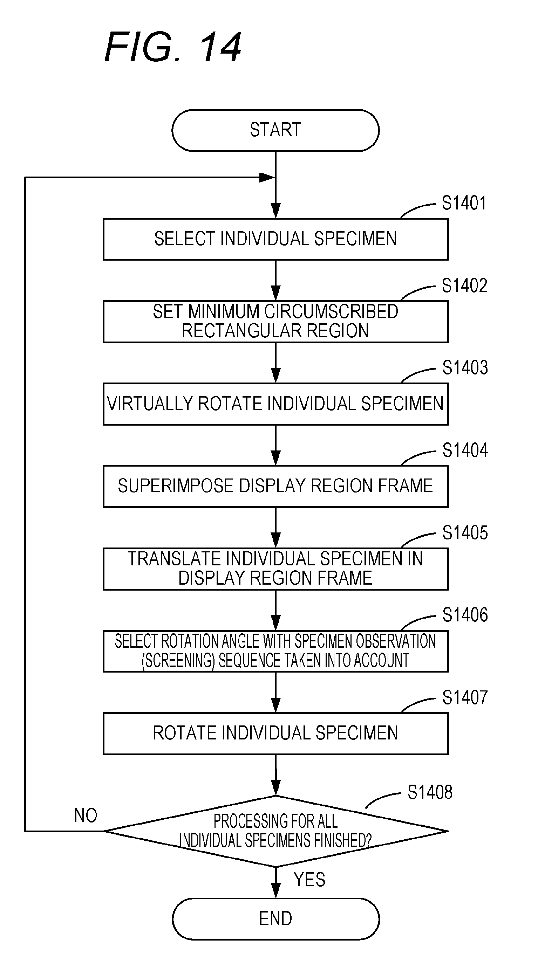

Fig. 14 is a flowchart for explaining setting of display region frames by rotation and translation of an individual specimen. Fig. 14 shows details of step S1103 in the flow shown in Fig. 11A. The flowchart of Fig. 14 replaces the flowchart of Fig. 11B. Another kind of processing related to reconfiguration of an individual specimen is the same as the processing shown in Figs. 11A and 11C.

In step S1401, the specimen arrangement adjusting section 409 selects one individual specimen on which the following processing is executed. In step S1402, the specimen arrangement adjusting section 409 sets a minimum circumscribed rectangular region for the individual specimen (see Fig. 13A). In step S1403, the specimen arrangement adjusting section 409 virtually rotates the individual specimen 1301 and the minimum circumscribed rectangular region 1302 integrally (see Fig. 13B). In step S1404, the specimen arrangement adjusting section 409 superimposes a minimum number of display region frames on the minimum circumscribed rectangular region set in step S1402 (see Fig. 13C). In step S1405, the specimen arrangement adjusting section 409 translates the individual specimen in the display region frames (see Fig. 13D). Consequently, a reduction of the display region frames and margin adjustment of the individual specimen in the display region frames are performed. In step S1406, the specimen arrangement adjusting section 409 performs rotation of the individual specimen with a specimen observation (screening) sequence taken into account (Fig. 13E). Among the four kinds of rotation, a rotation angle at which specimen observation (screening) can be continuously performed only by left right movement and downward movement as much as possible is selected. When a plurality of rotation angles are candidates, one rotation angle such as a rotation angle with less change in a moving direction or a rotation angle closest to an original direction is selected according to a predetermined rule. In step S1407, the specimen arrangement adjusting section 409 rotates the individual specimen at the rotation angle selected in step S1406. In step S1408, the specimen arrangement adjusting section 409 determines whether the steps S1401 to S1407 are executed on all individual specimens. If the steps S1401 to S1407 are executed on all the individual specimens, the specimen arrangement adjusting section 409 ends the processing. According to the processing steps explained above, it is possible to set the display region frames for the individual specimen.

### (Bringing-close of individual specimens)

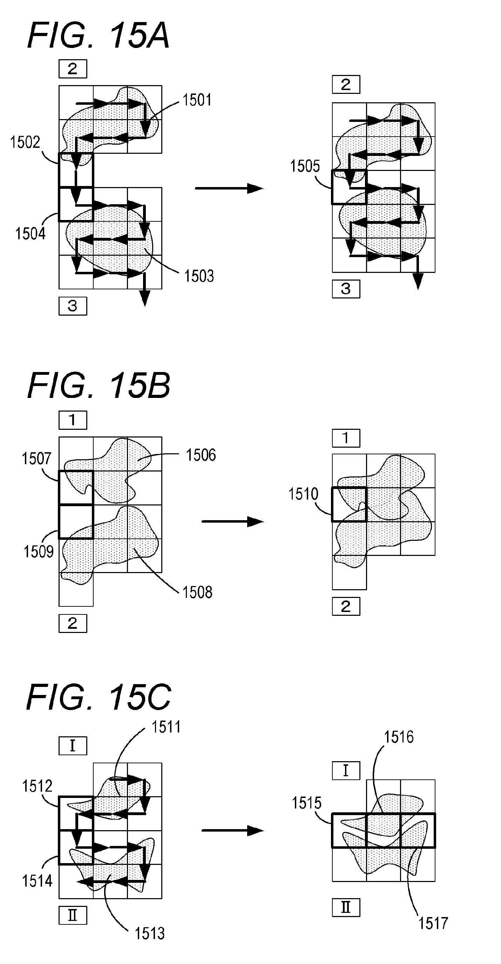

Figs. 15A to 15D are schematic diagrams for explaining adjustment of a display region (an enlarged image) (bringing-close of individual specimens). A method of further reducing display region frames on a reconfigured slide on which arrangement is adjusted by the translation shown in Fig. 10C is explained.

Fig. 15A is a schematic diagram for explaining overlapping determination for the individual specimen "2" and the individual specimen "3" and adjustment of a display region (bringing-close of individual specimens) based on the determination. Attention is directed to a display region frame 1502 displayed last in an individual specimen 1501 (the individual specimen "2") and a display region frame 1504 displayed first in an individual specimen 1503 (the individual specimen "3"). In Fig. 10C, the individual specimen 1501 and the individual specimen 1503 are connected such that an image of the display region frame 1502 and an image of the display region frame 1504 are joined. It is evaluated whether the display region frames 1502 and 1504 can be superimposed to connect the two individual specimens 1501 and 1503. A condition for enabling the connection is that overlap does not occur in the individual specimens 1501 and 1503 and inconsistency does not occur in display order of the individual specimen 1501 and display order of the individual specimen 1503 in an enlarged image common to the individual specimens 1501 and 1503. When the condition is satisfied, the display region frames 1502 and 1504 are superimposed to arrange the two individual specimens 1501 and 1503 (a right figure of Fig. 15A). An image of a display region frame 1505 is a combined image of the image of the display region frame 1502 displayed last in the individual specimen 1501 and the image of the display region frame 1504 displayed first in the individual specimen 1503. Consequently, an image displayed last among a plurality of enlarged images of the individual specimen 1501 and an image displayed first among a plurality of enlarged images of the individual specimen 1503 are common images.

Fig. 15B shows one example in which the method explained with reference to Fig. 15A cannot be applied. Attention is directed to a display region frame 1507 displayed last in an individual specimen 1506 (the individual specimen "1") and a display region frame 1509 displayed first in an individual specimen 1508 (the individual specimen "2"). When a display region frame 1510 obtained by superimposing the display region frames 1507 and 1509 each other is generated by a method same as the method shown in Fig. 15A and the individual specimens 1506 and 1507 are arranged, overlapping occurs in the two individual specimens as shown in a right figure in Fig. 15B. In this case, this method cannot be applied.

Fig. 15C shows another example in which the method explained with reference to Fig. 15A cannot be applied. Attention is directed to a display region frame 1512 displayed last in an individual specimen 1511 (an individual specimen "I") and a display region frame 1514 displayed first in an individual specimen 1513 (an individual specimen "II"). When the display region frames 1512 and 1514 are superimposed by a method same as the method shown in Fig. 15A, overlapping of the individual specimens 1511 and 1513 does not occur. However, both the individual specimens 1511 and 1513 are included in three images corresponding to the display region frames 1515, 1516, and 1517. Concerning the three images, whereas display order in the individual specimen 1511 is the left direction (1517→1516→1515), display order in the individual specimen 1513 is the right direction (1515→1516→1517). This is an example in which inconsistency occurs in the display order of two individual specimens in an enlarged image common to the two individual specimens. In this case, this method cannot be applied.

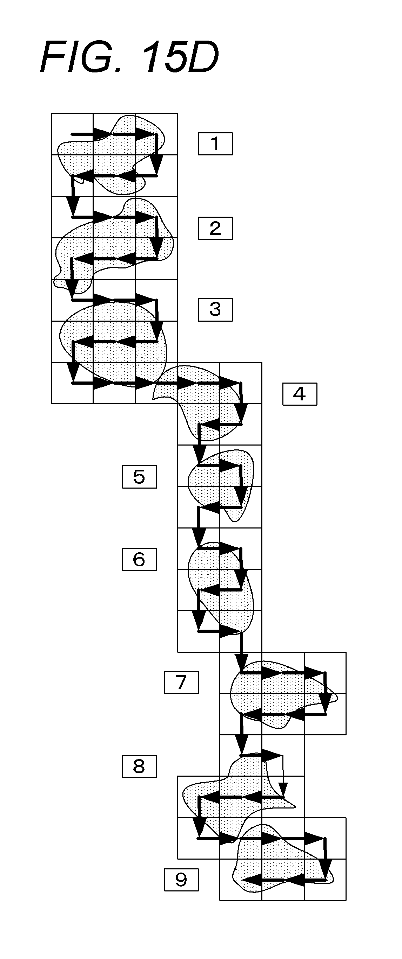

Fig. 15D schematically shows specimen arrangement on a reconfigured slide after a reduction of display region frames is performed according to the procedure explained with reference to Fig. 15A. When the reconfigured slide is compared with the reconfigured slide shown in Fig. 10C, display region frames are reduced in a connecting portion of the individual specimens "2" and "3", a connecting portion of the individual specimens "3" and "4", and a connecting portion of the individual specimens "8" and "9". The method explained above can also be applied to specimen arrangement on reconfigured slides shown in Figs. 12 and 13F.

### (Flow for bringing-close of individual specimens)

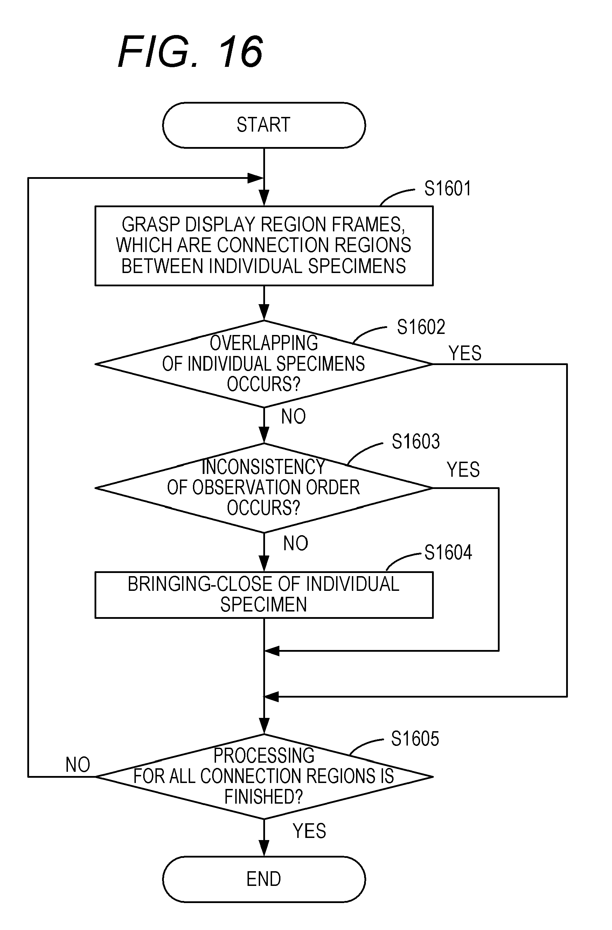

Fig. 16 is a flowchart for explaining adjustment of a display region (bringing-close of individual specimens). This processing is executed by the specimen arrangement adjusting section 409.

In step S1601, the specimen arrangement adjusting section 409 grasps two display region frames, which are connection regions between individual specimens. This processing is equivalent to grasping the last display region frame 1502 of the individual specimen 1501 and the first display region frame 1504 of the individual specimen 1503 in Fig. 15A.

In step S1602, the specimen arrangement adjusting section 409 determines whether overlapping of the individual specimens occurs when the two display region frames grasped in step S1601 is superimposed. This processing is equivalent to determining whether overlapping occurs in the individual specimen 1501 and the individual specimen 1503 in a state of the right figure of Fig. 15A. If overlapping does not occur, the processing proceeds to step S1603. If overlapping occurs, the individual specimens are not brought close to each other.

In step S1603, the specimen arrangement adjusting section 409 determines whether inconsistency of display order occurs when the two display region frames grasped in step S1601 are superimposed. This processing is equivalent to determining whether the display order of the display region frame 1502 and the display order of the display region frame 1504 coincide with each other in a left figure of Fig. 15A. If inconsistency does not occur, the processing proceeds to step S1604. If inconsistency occurs, the individual specimens are not brought close to each other.

In step S1604, the specimen arrangement adjusting section 409 brings the individual specimens close to each other. This processing is equivalent to adjusting relative positions of the individual specimens 1501 and 1503 (bringing the two individual specimens close to each other) to superimpose the display region frame 1502 of the individual specimen 1501 and the display region frame 1504 of the individual specimen 1503 in Fig. 15A. The specimen arrangement adjusting section 409 generates, by combining enlarged images of the two individual specimens, an enlarged image corresponding to the display region frame (1505 in the right figure of Fig. 15A) common to the two individual specimens.

In step S1605, the specimen arrangement adjusting section 409 determines whether the steps are executed on connecting regions among all the individual specimens. If the steps are executed on all the individual specimens, the specimen arrangement adjusting section 409 ends the processing.

### (Application screen (presentation image))

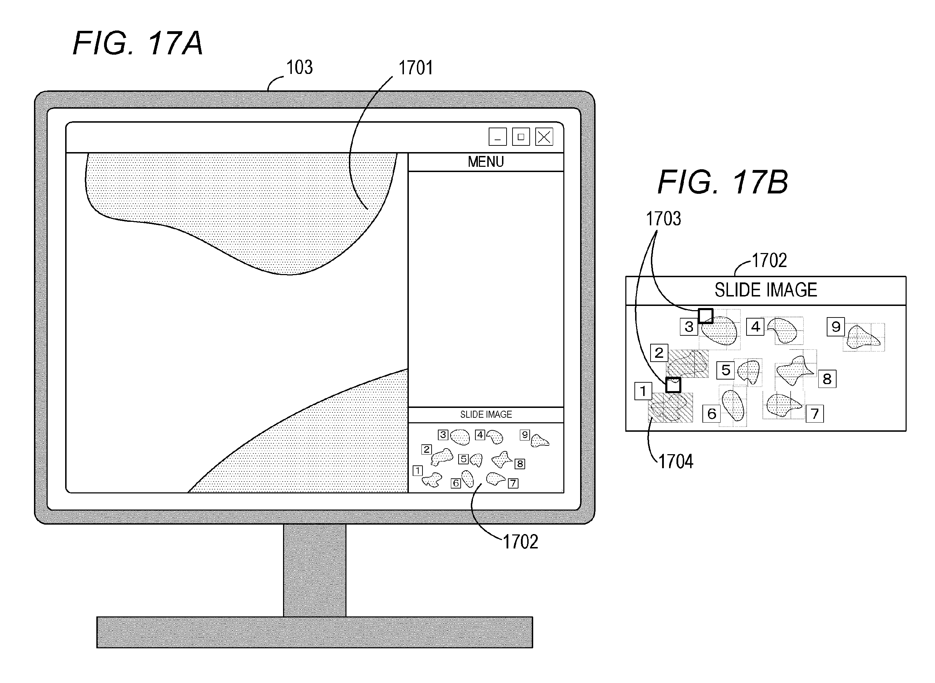

Figs. 17A and 17B are schematic diagrams for explaining a presentation image obtained when adjustment of a display region (bringing-close of individual specimens) is carried out. Fig. 17A shows an application screen displayed on the screen of the display apparatus 103. The application screen includes, besides a menu window, two windows for displaying an enlarged image 1701 and a slide image 1702. Fig. 17B is a diagram showing a window on which the slide image 1702 is displayed. Since a basic configuration is the same as the basic configuration explained with reference to Figs. 7A and 7B. Therefore, only differences from the presentation image explained with reference to Figs. 7A and 7B are explained below.

As explained with reference to Figs. 15A and 15D, a last display region frame of the individual specimen "2" and a first display region frame of the individual specimen "3" are common. Therefore, when a display region frame is moved to the end of the individual specimen "2", as shown in Fig. 17B, a thick frame 1703 indicating the preset display region is drawn in the last display region frame of the individual specimen "2" and the first display region frame of the individual specimen "3". On the other hand, an image obtained by combining the individual specimen "2" and the individual specimen "3" is displayed on the window of the enlarged image 1701. That is, a portion at the lower left of the individual specimen "2" is seen in an upper part of the enlarged image 1701 shown in Fig. 17A. A portion at the upper left of the individual specimen "3" is seen in a lower part of the enlarged image 1701. The number of times of switching (movement) of the enlarged image 1701 can be reduced by such a method. Therefore, it is possible to attain efficiency of a specimen observation (screening).

In Fig. 17B, a display region frame corresponding to a region 1704 already subjected to a specimen observation (screening) is hatched. Consequently, the user can easily check the progress of the specimen observation (the screening) in the entire slide (the nine individual specimens). Since a region observed already and a region not observed yet only have to be distinguished, the regions may be distinguished by a method other than the hatching. Any method may be used. For example, a region observed already and other regions may be distinguished by colors or images of marks or icons indicating "observed already" and "not observed yet" may be added.

### (Separation of individual specimens)

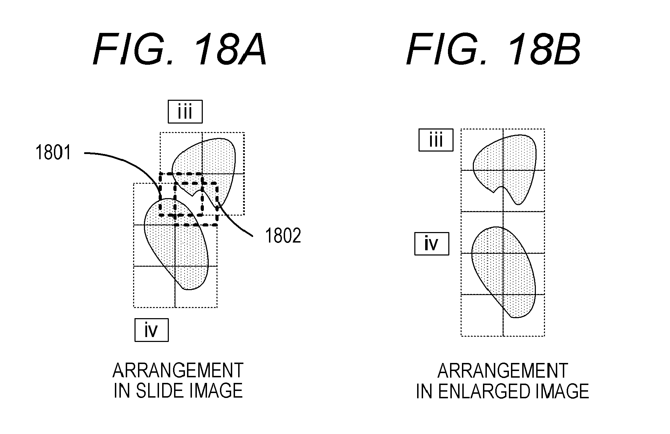

Figs. 18A and 18B are schematic diagrams for explaining separation of individual specimens in a reconfigured slide. When an interval between individual specimens on the actual slide 206 is extremely narrow, a part of another individual specimen is sometimes included in a display region frame of a certain individual specimen. In an example shown in Fig. 18A, since an interval between an individual specimen "iii" and an individual specimen "iv" is narrow on the slide, the individual specimen "iv" is included in a display region frame 1801 of the individual specimen "iii" and the individual specimen "iii" is included in a display region frame 1802 of the individual specimen "iv".

The specimen observation (the screening) may be performed using such display region frames. However, when an individual specimen other than an individual specimen being observed is displayed, it is likely that the user misunderstands the shape and the like of the individual specimen, attention of the user is diverted to a portion not required to be observed, and efficiency is deteriorated. Therefore, another individual specimen may be prevented from being displayed in a display region frame set in association with a certain individual specimen such that the user can concentrate on observation of one individual specimen. Fig. 18B shows an example in which the individual specimen "iii" and a display region frame set for the individual specimen "iii" and the individual specimen "iv" and a display region frame set for the individual specimen "iv" are extracted independently from each other to reconfigure a specimen image (an enlarged image). In this case, processing for erasing an image of the individual specimen "iv" from a specimen image (an enlarged image) corresponding to the display region frame 1801 is performed. Processing for erasing an image of the individual specimen "iii" from a specimen image (an enlarged image) corresponding to the display region frame 1802 is performed.

### (Explanation of image formats)

Figs. 19A to 19C are schematic diagrams for explaining image file formats.

Fig. 19A shows a basic file format of image data. The basic file format includes a header, image data, and additional data. The header includes a file header, pre-measurement information, imaging information, and lighting information. In the file header, information concerning an entire file structure such as byte order of the image data is stored. In the pre-measurement information, label information of the slide 206 and information acquired by pre-measurement such as a slide size are stored. In the imaging information, information concerning imaging such as a lens magnification, an imaging time, and a pixel size of an imaging element is stored. In the lighting information, information concerning lighting such as a light source type is stored. The image data includes an image data header and hierarchical image data. In the image data header, information concerning the structure of the image data such as the number of layers is stored. In the hierarchical image data, high magnification image data, medium magnification image data, low magnification image data, and slide image data are stored. Image data stored as the hierarchical image data is equivalent to the hierarchical image data shown in Fig. 5. The high magnification image data, the medium magnification image data, and the low magnification image data are respectively the fourth layer image 504, the third layer image 503, and the second layer image 502. The slide image data is equivalent to data of the first layer image 501. The additional data includes an additional data header and annotation information. In the additional data header, information concerning the structure of the additional data such as a type of the additional data is stored. In the annotation information, a writing position, a type, a pointer to written content of an annotation are stored. The basic file format of the image data shown in Fig. 19A is generated for all imaged slides.

Fig. 19B shows a file format of data statically generated when a plurality of individual specimens are included in the slide 206. The file format is generated as a part of slide image data. A data size of a circumscribed rectangular region, a start address (X, Y) of the circumscribed rectangular region, and a pixel size (X, Y) of the circumscribed rectangular region are stored for each of individual specimens. When a magnification (a display region frame) of an enlarged image or a specimen observation (screening) sequence is changed, image data of the enlarged image 701 can be generated using the information shown in Fig. 19B.

Fig. 19C shows a file format of data dynamically generated when a magnification of an enlarged image and a specimen observation (screening) sequence are set. In a display region size (X, Y), sizes (width in the X direction and height in the Y direction) on a slide image of a display region calculated on the basis of the magnification of the enlarged image, that is, the width and the height of a display region frame are stored. Concerning respective individual specimens, the number of display regions and start addresses (X, Y) of the respective display regions are calculated and stored in the display region size (X, Y). The start address (X, Y) is a coordinate of a pixel at the upper left of a display region frame on a slide image. (Dynamic) Slide image data shown in Fig. 19C is equivalent to data for defining the specimen observation (screening) sequence and reconfigured specimen arrangement, that is, data of a reconfigured slide. An enlarged image displayed in a specimen observation (screening) is dynamically read and generated on the basis of the display region size (X, Y) and the start address (X, Y) of the display region.

When the bringing-close of individual specimens explained with reference to Fig. 15A, the separation of individual specimens explained with reference to Figs. 18B, and the like are performed, image data read from hierarchical image data cannot be directly used as an enlarged image, and image processing such as combination of images or erasing of a part of the images is necessary. Therefore, it is desirable to describe, in the (dynamic) slide image data shown in Fig. 19C, information indicating a display region in which bringing-close or separation of individual specimens is performed. The image processing such as the combination of images or the erasing of a part of the images may be performed when an enlarged image of a portion where the bringing-close or the separation of the individual specimens is performed in the specimen observation (the screening) is displayed. However, from the viewpoint of improvement of display speed (responsiveness), it is desirable to generate processed enlarged image data in advance. For example, when the (dynamic) slide image data is generated, data of an enlarged image corresponding to a display region where the bringing-close or the separation of the individual specimens is performed is generated and stored in the memory or the storage device. In the start address (X, Y) of the display region of the (dynamic) slide image data, information (an address of a storage destination, a file name, etc.) for specifying the generated data of the enlarged image only has to be described rather than a coordinate on a slide image.

### (Application operation example in the specimen observation (the screening))

User operation and the operation of the image presentation application in the specimen observation (the screening) are explained with reference to Figs. 7A and 7B. It is assumed that the (dynamic) slide image data shown in Fig. 19C is already generated by the specimen arrangement adjusting section 409.

When the specimen observation (the screening) is started, the control section 301 acquires, from the (dynamic) slide image data shown in Fig. 19C, the display region size (X, Y) and the start address (X, Y) of the first display region of the individual specimen "1". The control section 301 reads, from hierarchical image data corresponding to a display magnification, image data corresponding to a region determined by the display region size (X, Y) and the start address (X, Y), generates the enlarged image 701, and displays the enlarged image 701 on the display apparatus 103. The control section 301 combines the thick frame 706 indicating the present display region with slide image data read from the hierarchical image data and displays the slide image 702.

The user observes the enlarged image 701 and checks whether an abnormality or the like occurs. When the user finds a portion (a region of interest) where an abnormality is likely to occur, the user records the position of the region of interest using the mouse 312 or the keyboard 311 and inputs an annotation (a comment) according to necessity. When the observation of the enlarged image 701 being displayed is finished, the user instructs a change to the next display region (instructs movement to the next display region). The change of the display region can be instructed by depression of a key of the keyboard 311, depression of a button or rotation of a wheel of the mouse 312, operation of a GUI displayed on a screen, or the like. As a simple method, a user interface for transitioning the display region to the next display region in order every time the same key or button (e.g., a "Next" button or an Enter key) is depressed is conceivable.

When the change of the display region is instructed, the control section 301 acquires the start address (X, Y) of the next display region from the (dynamic) slide image data shown in Fig. 19C and displays the enlarged image 701 corresponding to the start address on the display apparatus 103. The control section 301 updates a display position of the thick frame 706 in the slide image 702. When the display region is changed, display of the previous enlarged image and the next enlarged image may be switched or the previous enlarged image may be gradually scrolled to the next enlarged image.

Figs. 7A and 7B show a state in which the observation of the enlarged image and the change of the display region are repeated and the observation is finished to the last display region of the individual specimen "1". When the user instructs the change of the display region in this state, the control section 301 moves the display region to the first display region of the next individual specimen "2". That is, the control section 301 acquires, from the (dynamic) slide image data shown in Fig. 19C, the start address (X, Y) of the first display region of the individual specimen "2" and displays the enlarged image 701 corresponding to the start address on the display apparatus 103. The control section 301 updates the display position of the thick frame 706 in the slide image 702.

According to the method explained above, the update of the enlarged image is performed such that the display region moves according to a predetermined sequence on the reconfigured slide in response to the movement instruction of the user. Therefore, the user can observe the individual specimens "1" to "9" in order and observe all enlarged images of the individual specimens without omission. When the user instructs the change of the display region in a state in which a last enlarged image of a certain individual specimen is observed, the display region automatically moves to a first enlarged image of the next individual specimen. Therefore, operation is simple and occurrence of overlooking due to an operation mistake can be prevented. Consequently, it is possible to substantially reduce an operation burden on the user. Further, the display region is switched such that only a portion of an individual specimen can be observed in as small a number of times as possible. Therefore, it is possible to perform an extremely efficient specimen observation (screening).

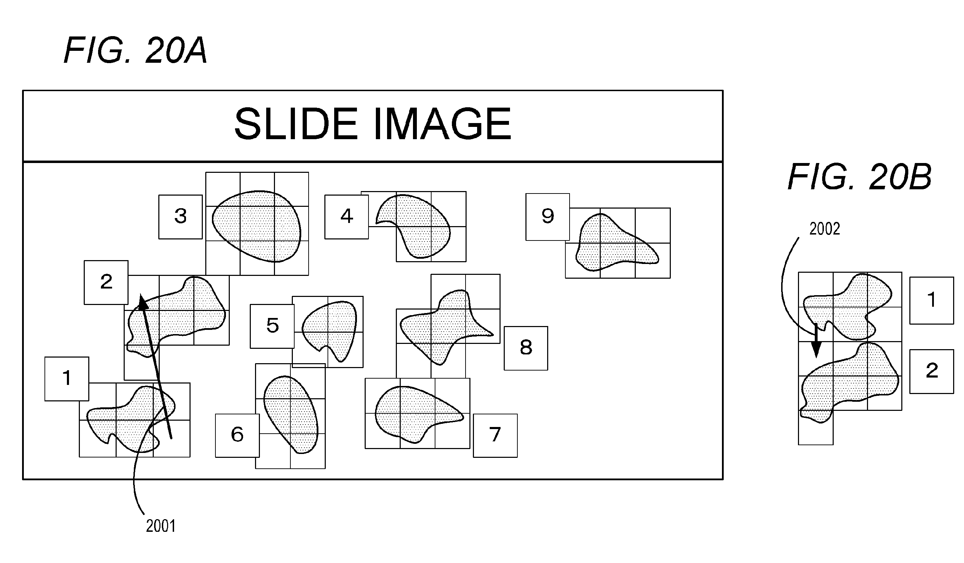

Figs. 20A and 20B are schematic diagrams for explaining effects by reconfiguration of specimen arrangement. An arrow shown in Fig. 20A indicates movement 2001 between individual specimens in a conventional example. When the specimen observation (the screening) is performed according to the specimen observation (screening) sequence explained with reference to Figs. 9A to 9E, it is necessary to suspend the specimen observation (screening) sequence and move the display region from the individual specimen "1" to the individual specimen "2" by a large distance. When the user has to perform this movement, operation for the movement is troublesome and an operation mistake is likely to be caused. On the other hand, an arrow shown in Fig. 20B indicates movement 2002 between individual specimens in this embodiment. It is possible to move the display region even between the individual specimens without hindering the specimen observation (screening) sequence. That is, according to the reconfiguration of the individual specimens (the adjustment of the arrangement) in this embodiment, when there are a plurality of specimens on the slide, it is possible to reduce the burden of the specimen observation (the screening).

In this embodiment, the image file formats shown in Figs. 19A to 19C are used. Therefore, it is unnecessary to generate image data subjected to adjustment of specimen arrangement (reconfiguration). A reading position of data of an enlarged image only has to be controlled. Consequently, it is possible to perform a reduction in a processing load and a reduction of a storage capacity.

### (Second example of the presentation image)

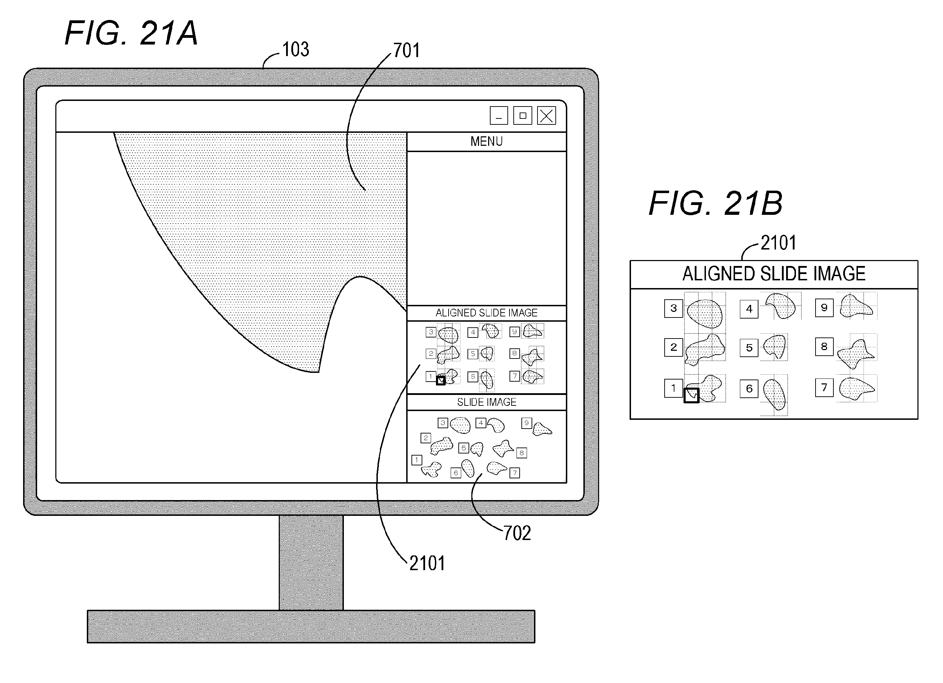

Figs. 21A and 21B are schematic diagrams for explaining a second example of the presentation image.

Fig. 21A shows an application screen displayed on the screen of the display apparatus 103. The application screen includes, besides a menu window, three windows for displaying the enlarged image 701, the slide image 702, and an individual specimen rearranged image 2101. Compared with Fig. 7A, the window for the individual specimen rearranged image 2101 is added.

Fig. 21B is a diagram showing the window on which the individual specimen rearranged image 2101 is displayed. The individual specimen rearranged image 2101 is an image in which a plurality of individual specimens are arrayed. In an example shown in Fig. 21B, nine individual specimens are arrayed in three rows and three columns (in both row and column directions). However, the individual specimens may be arrayed in one of the row direction and the column direction. In this case, the plurality of individual specimens are desirably arranged in order according to observation order of the individual specimens. The individual specimen rearranged image 2101 is generated by the specimen arrangement adjusting section 409 and stored as a part of the slide image data shown in Fig. 19A. Since misalignment of individual specimens and overlapping of display region frames do not occur, compared with Fig. 7B, a positional relation among the individual specimens are displayed clearly for the user.

As a presentation form, it is also possible that the window for the slide image 702 is not displayed and, besides the menu window, there are the two windows for displaying the enlarged image 701 and the individual specimen rearranged image 2101.

### (Third example of the presentation image)

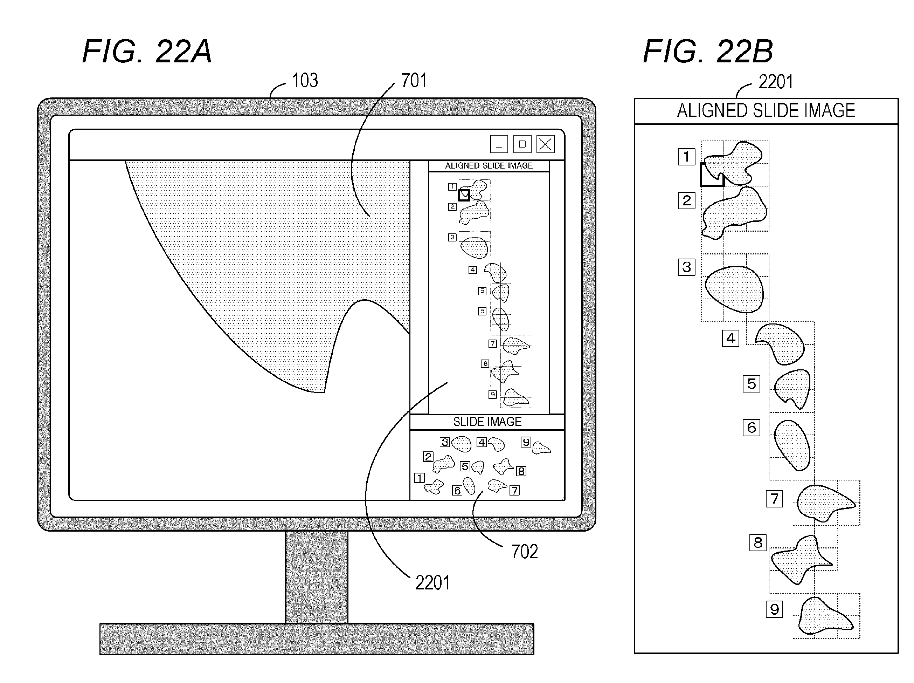

Figs. 22A and 22B are schematic diagrams for explaining a third example of the presentation image.

Fig. 22A shows an application screen displayed on the screen of the display apparatus 103. The application screen includes, besides a menu window, three windows for displaying the enlarged image 701, the slide image 702, and an overall image 2201 of a reconfigured slide. Compared with Fig. 7A, the window for the overall image 2201 of the reconfigured slide is added.

Fig. 22B is a diagram showing the window on which the overall image 2201 of the reconfigured slide is displayed. The overall image 2201 of the reconfigured slide is an image showing the entire arrangement of individual specimens (adjusted specimen arrangement) in the reconfigured slide explained above. The overall image 2201 of the reconfigured slide is generated by the specimen arrangement adjusting section 409 and stored as a part of the slide image data shown in Fig. 19A. The enlarged image 701 and the overall image 2201 of the reconfigured slide are in a simple relation of enlargement and reduction. Therefore, compared with Fig. 7B, correspondence between observation regions in an enlarged image and an overall image is displayed clearly for the user.

As a presentation form, it is also possible that the window for the slide image 702 is not displayed and, besides the menu window, there are the two windows for displaying the enlarged image 701 and the overall image 2201 of the reconfigured slide. Information for clearly indicating the order (a sequence) of observation (e.g., a number or an arrow indicating the order) may be shown in the overall image 2201 of the reconfigured slide. Further, a function for enabling the user to manually change the order (the sequence) of observation, the position, the size, and a method of division of a display region frame, connection among individual specimens, and the like may be provided. For example, it is desirable if the user can drag with the mouse 312 and change the display region frame, the order of observation, the individual specimens, and the like displayed in the overall image 2201 of the reconfigured slide.

### <Second Embodiment>

### (Overview of a second embodiment)

In the first embodiment, the specimen observation (the screening) is explained. On the other hand, in a second embodiment, display control modes and display processing in the display control modes are explained. The display control modes include a plurality of modes, i.e., a "normal mode", an "observation mode" and a "check mode". The specimen observation (the screening) explained in the first embodiment corresponds to the observation mode. Therefore, the contents and effects of the contents in the first embodiment can also be applied to the second embodiment. This embodiment includes the first embodiment and has a characteristic in display methods in the display control modes for a plurality of specimens present on a slide and, in particular, a presentation method for an enlarged image.

The image processing apparatus of the present invention can be used in an image processing system including an imaging apparatus and a display apparatus. The configuration of the image processing system, functional blocks of the imaging apparatus in the image processing system, the hardware configuration of the image processing apparatus, the structure of hierarchical image data, the configuration of a slide, and processing concerning a specimen observation (screening) are the same as the contents explained in the first embodiment. Therefore, explanation of the foregoing is omitted.

### (Setting of the display control modes)

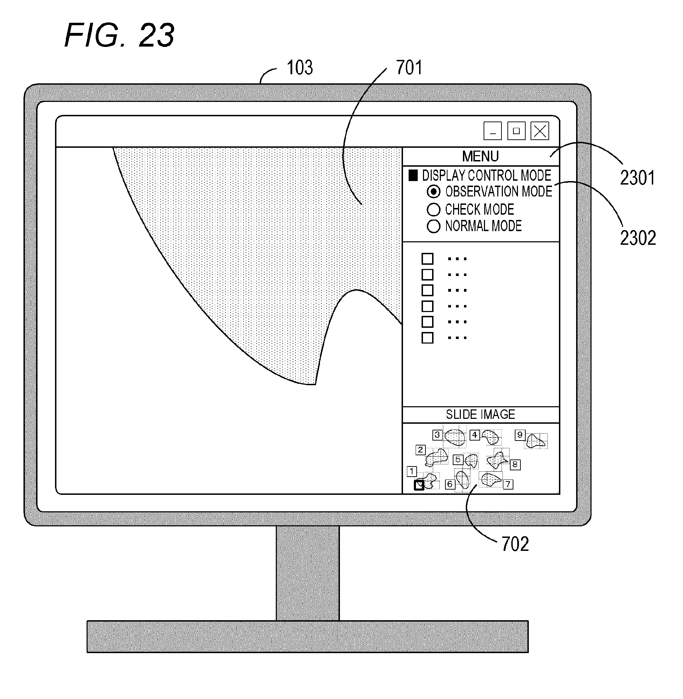

Fig. 23 is a schematic diagram for explaining setting of the display control modes (the normal mode, the observation mode, and the check mode). Fig. 23 shows an application screen displayed on the screen of the display apparatus 103. The application screen includes a menu window 2301, a window for displaying the enlarged image 701, and a window for displaying the slide image 702. A basic configuration is the same as the basic configuration explained with reference to Fig. 7A and 7B. Therefore, only differences from the presentation image explained with reference to Figs. 7A and 7B are explained. Various menus including a display control mode menu are displayed on the menu window 2301. The display control modes include the three kinds of control modes, i.e., the observation mode, the check mode, and the normal mode. In an example shown in Fig. 23, the display control modes can be selected by a radio button.

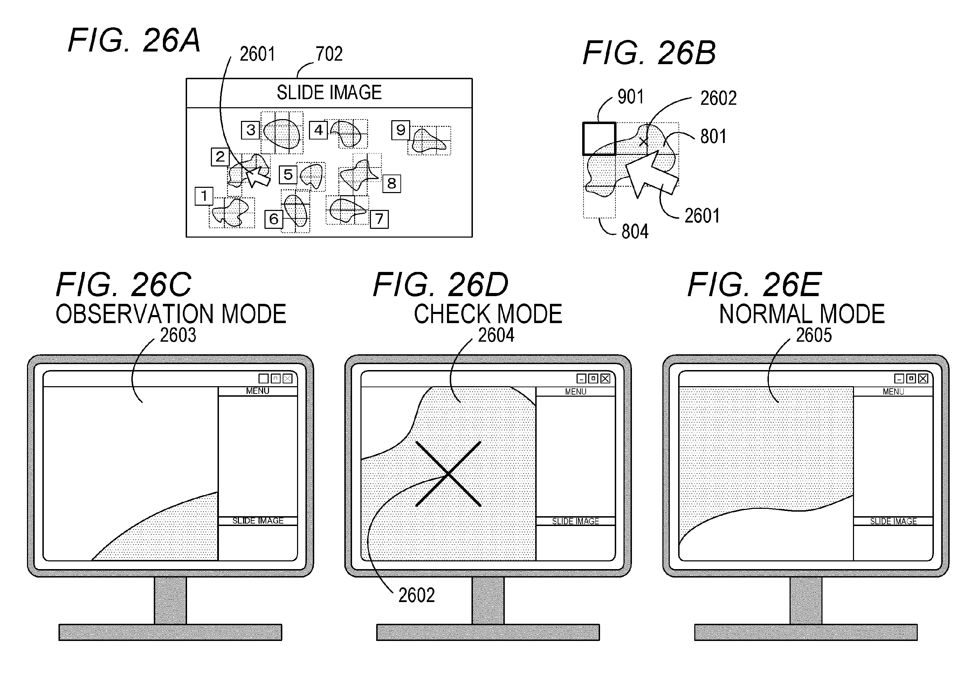

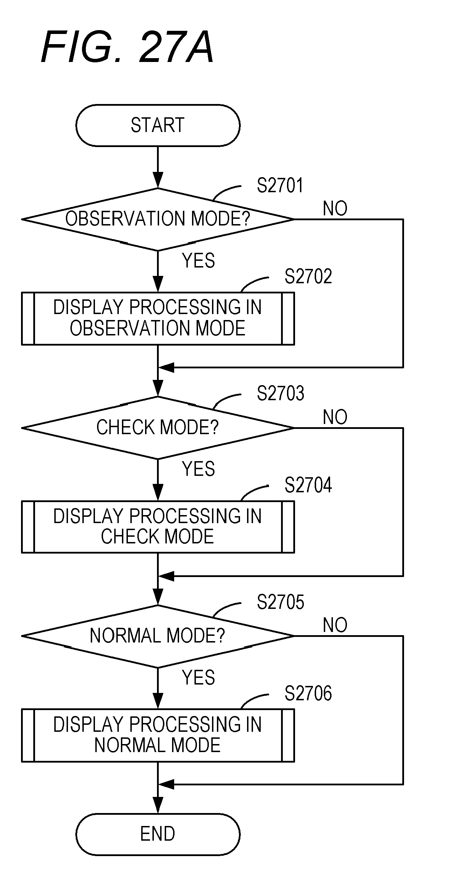

Display processing and display processing flows in the respective display control modes are explained below with reference to Figs. 26A to 26E and Figs. 27A to 27D. Therefore, first, an overview of the respective display control modes is explained.

The observation mode is a mode suitable for a specimen observation (screening) carried out for the purpose of screening an entire specimen on a slide and finding a lesion.

The check mode is a mode suitable for double-checking POI (Point Of Interest) information and ROI (Region Of Interest) information. POI and ROI are a point and a region where information useful for a diagnosis is obtained and a point and a region desired to be observed in detail again. For example, the POI and ROI are a point and a region set by a user in the specimen observation (the screening) in the observation mode. The points and the regions are uniquely defined as coordinates of image data. The POI information and the ROI information include, besides coordinates indicating the POI and the ROI, for example, an annotation for recording, as a text, information useful for a diagnosis in the POI and the ROI. The check mode is used, for example, when the POI and the ROI are desired to be observed in detail again after the specimen observation (the screening) and when a region useful for a diagnosis in a specimen is promptly indicated to a learner for an education purpose.

The normal mode is a mode in performing general image display. The observation mode and the check modes are display method optimum for purposes of the respective modes. However, the observation mode and the check mode do not directly reflect input operation of the user on display. The normal mode is used in freely performing a specimen observation independently of limited purposes such as the specimen observation (the screening) and the double-check of POI/ROI information.

Menus other than the display control menu include, for example, a menu for setting a magnification of the enlarged image 701 during the specimen observation (the screening). The setting method for the display control mode shown in Fig. 23 is an example, and any method may be used. For example, the display control mode may be set using a shortcut key.

### (Functional block configuration of a control section)

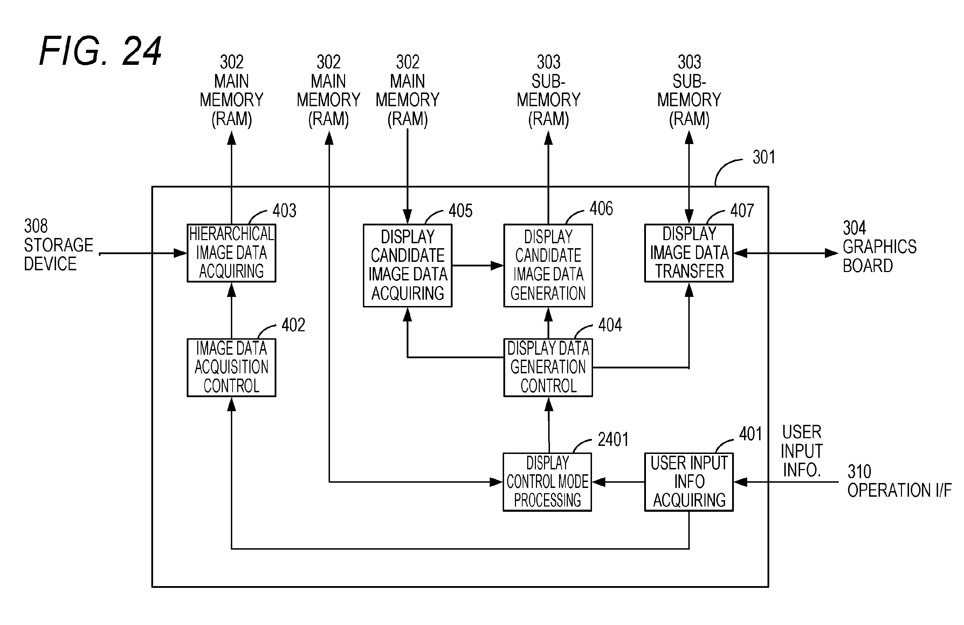

Fig. 24 is a functional block diagram of an image generation and control section of the image processing apparatus. A basic configuration is the same as the basic configuration explained with reference to Fig. 4. Therefore, only differences from the functional block diagram of Fig. 4 are explained. A display control mode processing section 2401 performs control processing for acquiring update information of the display control mode and individual specimen selection operation of the user and generating enlarged image data in a set display control mode. The operation of the display control mode processing section 2401 is different for each of the display control modes. Display processing flows in the respective display control modes are explained with reference to Figs. 27A to 27D below.

### (Setting flow for the display control mode)

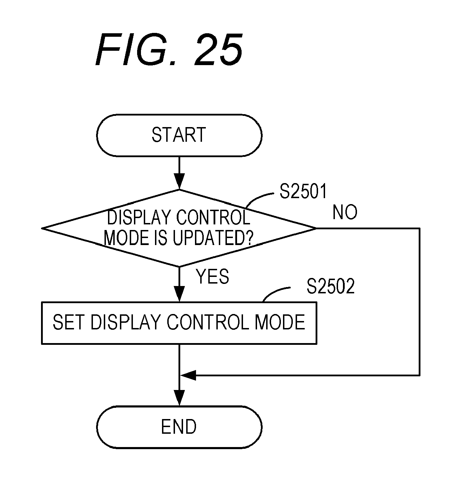

Fig. 25 is a flowchart for explaining setting of the display control mode.

In step S2501, the display control mode processing section 2401 determines whether update of the display control mode is performed. Specifically, the display control mode processing section 2401 monitors whether a display control mode menu 2302 is changed. If the display control mode is updated, the processing proceeds to step S2502. In step S2502, the display control mode processing section 2401 performs setting of the display control mode (switching to the display control mode selected by the user). The setting of the display control mode is retained by the display control mode processing section 2401. The display data generation control section 404 controls display processing matching the set display control mode.

### (Display processing in the display control modes)

Figs. 26A to 26E are schematic diagrams for explaining display processing in the display control modes.

Fig. 26A is a diagram showing in detail a window on which the slide image 702 is displayed. A basic configuration is the same as the basic configuration explained with reference to Fig. 7B. Therefore, only differences from the presentation image explained with reference to Fig. 7B are explained. The user can select an individual specimen on the slide image 702 using a pointer 2601. Fig. 26A shows an example in which the individual specimen "2" is selected.

Fig. 26B is an enlarged view of the individual specimen "2" shown in Fig. 26A. A basic configuration is the same as the basic configuration explained with reference to Fig. 9A. Therefore, only differences from the schematic diagram of Fig. 9A are explained. The pointer 2601 points arbitrary one point on the individual specimen "2" designated by the user. A region of interest 2602 is a region equivalent to the POI and is, for example, a point set as a point where the user can obtain information useful for a diagnosis in the observation mode. The region of interest 2602 is the POI (a point). However, when a region of interest is defined over a certain range (has an area rather than a point), the region of interest 2602 is the ROI (a region). In the following explanation, the POI and the ROI are collectively referred to as region of interest (or region of attention).

Figs. 26C to 26E are schematic diagrams for explaining enlarged images displayed in the display control modes. Images displayed on the display apparatus 103 as enlarged images after an individual specimen is selected by the pointer 2601 are different in the display control modes. Fig. 26C shows an enlarged image 2603 in the observation mode. Fig. 26D shows an enlarged image 2604 in the check mode. Fig. 26E shows an enlarged image 2605 in the normal mode.

Fig. 26C shows the enlarged image 2603 in the observation mode. In the observation mode, when the user selects the individual specimen "2" on the slide image 702 shown in Fig. 26A, the observation start position 901 of the individual specimen 801 is displayed in the enlarged image 2063 shown in Fig. 26C. In the specimen observation (screening) sequence in the first embodiment, the sequence for observing the specimens in order from the individual specimen "1" is explained. In the second embodiment, the specimen observation (screening) sequence in the first embodiment is expanded. That is, if this function in the second embodiment is used, a more flexible specimen observation (screening) is possible. For example, when an individual specimen for which an observation is already finished is selected by the pointer 2601 halfway in the specimen observation (the screening), it is possible to observe the individual specimen again. After the specimen observation (the screening) of all individual specimens on a slide is finished, it is also possible to select an individual specimen of concern again and resume the specimen observation (the screening) from the individual specimen.

Fig. 26D shows the enlarged image 2604 in the check mode. In the check mode, when the user selects the individual specimen "2" on the slide image 702 shown in Fig. 26A, an enlarged image centering on the region of interest 2602 of the individual specimen 801 is displayed in the enlarged image 2604 shown in Fig. 26D. When there are a plurality of regions of interest, by simultaneously setting priority levels when the regions of interest, control for displaying the regions of interest in order from the region of interest having the highest priority level is performed. When a region of interest is defined over a certain range (has an area rather than a point), control for displaying the region of interest at a magnification for enabling the entire region of interest to be displayed is performed. In that case, the center of a minimum circumscribed rectangle of the region of interest only has to be considered to be the center of the region of interest.

Fig. 26E shows the enlarged image 2605 in the normal mode. An enlarged image centering on a point pointed by the pointer 2601 shown in Fig. 26B is shown. When it is desired to directly reflect input operation of the user on display, display processing in the normal mode is useful.

### (Display processing flows in the display control modes)

Fig. 27A is a flowchart for explaining setting of the display control mode and display processing for the display control mode.

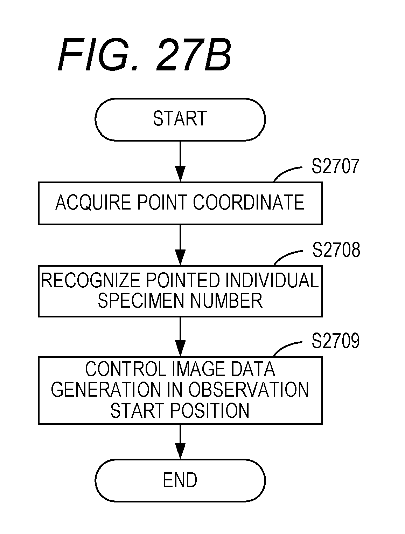

In step S2701, the display control mode processing section 2401 determines whether the display control mode is set in the observation mode. If the display control mode is set in the observation mode, the processing proceeds to step S2702. If the display control mode is not set to the observation mode, the processing proceeds to step S2703. In step S2702, the display control mode processing section 2401 executes display processing in the observation mode. Details of the display processing in the observation mode are explained below with reference to Fig. 27B.

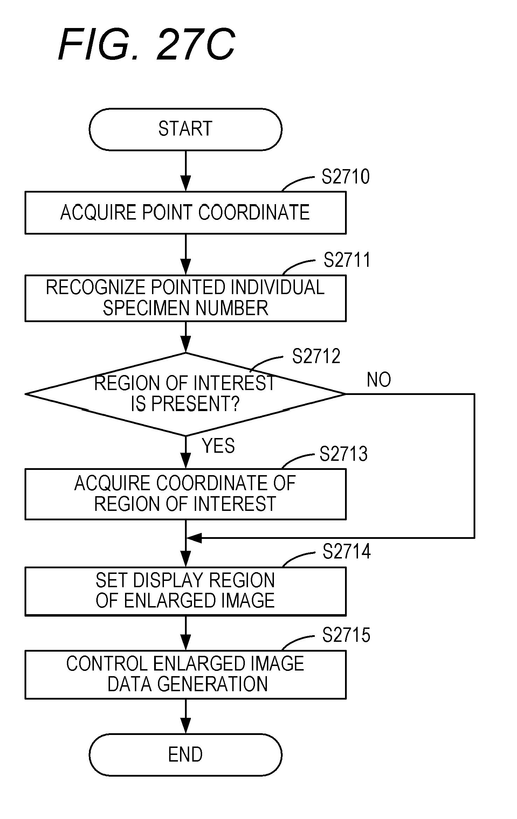

In step S2703, the display control mode processing section 2401 determines whether the display control mode is set to the check mode. If the display control mode is set in the check mode, the processing proceeds to step S2704. If the display control mode is not set in the check mode, the processing proceeds to step S2705. In step S2704, the display control mode processing section 2401 executes display processing in the check mode. Details of the display processing in the check mode are explained below with reference to Fig. 27C.

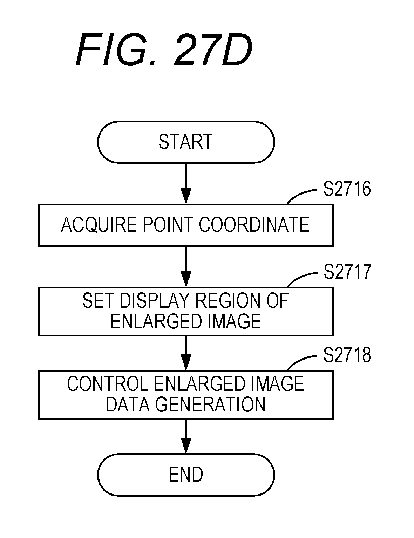

In step S2705, the display control mode processing section 2401 determines whether the display control mode is set in the normal mode. If the display control mode is set in the normal mode, the processing proceeds to step S2706. If the display control mode is not set in the normal mode, the display control mode processing section 2401 ends the processing. In step S2706, the display control mode processing section 2401 executes display processing in the normal mode. Details of the display processing in the normal mode are explained below with reference to Fig. 27D.

Fig. 27B is a flowchart for explaining the display processing in the observation mode and corresponds to step S2702 in Fig. 27A. In step S2707, the display control mode processing section 2401 acquires a coordinate of a point selected by the user using the pointer 2601. In an example shown in Fig. 26B, the user points one point in the individual specimen 801 (the individual specimen "2") using the pointer 2601. However, in step S2707, a coordinate of the pointed point is acquired. In step S2708, the display control mode processing section 2401 recognizes a number of the pointed individual specimen. Specifically, the display control mode processing section 2401 recognizes a number of the individual specimen having the point coordinate acquired in step S2707 referring to the image file format explained with reference to Fig. 19C. In step S2709, the display data generation control section 404 performs control of image data generation in an observation start position in the individual specimen recognized in step S2708. A coordinate range of image data in the observation start position can be acquired from the image file format explained with reference to Fig. 19C. According to the processing steps S2707 to S2709, it is possible to execute the display processing in the observation mode.

Fig. 27C is a flowchart for explaining the display processing in the check mode and corresponds to step S2704 in Fig. 27A. In step S2710, the display control mode processing section 2401 acquires a coordinate of a point selected by the user using the pointer 2601. This step S2710 is processing same as step S2707. In step S2711, the display control mode processing section 2401 recognizes a number of a pointed individual specimen. This step S2711 is processing same as step S2708. In step S2712, the display control mode processing section 2401 determines whether a region of interest is present in the pointed individual specimen. If the region of interest is present, the processing proceeds to step S2713. If the region of interest is absent, the processing proceeds to step S2714. In step S2713, the display control mode processing section 2401 acquires a coordinate of the region of interest. When there are a plurality of regions of interest, the display control mode processing section 2401 acquires a coordinate of a region of interest having a highest priority level. In step S2714, the display control mode processing section 2401 sets a display region of an enlarged image. The display control mode processing section 2401 sets the center of the display region of the enlarged image as a coordinate of the region of interest and calculates the display region on the basis of a magnification of the set enlarged image. When the region of interest is defined over a certain range (has an area rather than a point), the display control mode processing section 2401 sets the display region at a magnification for enabling the entire region of interest to be shown. In that case, the center of a minimum circumscribed rectangle of the region of interest is considered to be the center of the region of interest. When determining in step S2712 that the region of interest is absent, the display control mode processing section 2401 sets the center of the display region of the enlarged image as a point coordinate and calculates the display region on the basis of a magnification of the set enlarged image. In step S2715, the display data generation control section 404 performs image data generation control for the display region set in step S2713. According to the processing steps S2710 to S2715, it is possible to execute the display processing in the check mode.

Fig. 27D is a flowchart for explaining the display processing in the normal mode and corresponds to step S2706 in Fig. 27A. In step S2716, the display control mode processing section 2401 acquires a coordinate of a point selected by the user using the pointer 2601. This step S2716 is processing same as step S2707. In step S2717, the display control mode processing section 2401 sets a display region of an enlarged image. The display control mode processing section 2401 sets the center of the display region of the enlarged image as a point coordinate and calculates the display region on the basis of a magnification of the set enlarged image. In step S2718, the display data generation control section 404 performs image data generation control for the display region set in step S2717. According to the processing steps S2716 to S2718, it is possible to execute the display processing in the normal mode.

In the explanation in the second embodiment, it is assumed that the individual specimen selection operation by the user and the enlargement instruction operation by the user are the same operation. However, the individual specimen selection operation and the enlargement instruction operation do not always need to be the same operation. For example, in the normal mode, when the individual specimen selection operation is performed by the user, an overall image (a reduced image) of the selected individual specimen may be displayed. Alternatively, in the normal mode, when the enlarged image is not updated even if the individual specimen selection operation is performed, steps S2705 and S2706 in Fig. 27A may be deleted.

In the second embodiment, the method of pointing an arbitrary point on a slide image (a point on any one of the individual specimens) to select an individual specimen to be displayed in enlargement is explained. However, it is also possible to select an individual specimen using other user interfaces. For example, on an overall image of a reconfigure slide shown in Figs. 22A and 22B, it is also possible to cause the user to select an individual specimen to be displayed in enlargement. Alternatively, it is also possible to cause the user to designate (input) a number of an individual specimen rather than selecting the individual specimen on an image. In both the user interfaces, in the observation mode, it is desirable to display a selected individual specimen in enlargement centering on a portion corresponding to an observation start position of the individual specimen. In the check mode, it is desirable to display a selected individual specimen in enlargement centering on a region of interest of the individual specimen. In the normal mode, it is desirable to display a selected individual specimen in enlargement centering on a coordinate pointed by the user.

### (Characteristic of the second embodiment)

A characteristic of this embodiment is explained. This embodiment has a characteristic in varying a center position of enlargement processing according to the display control modes. In the observation mode, the center of an image in an observation start position of the specimen observation (the screening) is the center position of the enlargement processing. In the check mode, a region of interest recorded in the specimen observation (the screening) or the like is the center position of the enlargement processing. When the region of interest is a POI (a point), a coordinate of the POI is the center position of the region of interest. When the region of interest is an ROI (a region having an area), a center coordinate of a minimum circumscribed rectangle of the ROI is the center position of the region of interest. It is the characteristic of the second embodiment that the center position of the enlargement processing is determined according to the display control mode irrespective of a position (a point coordinate) designated by the user.

### (Effects of the second embodiment)

According to the processing in the second embodiment, it is possible to promptly display, according to a purpose such as the specimen observation (the screening) or double-check of the specimen observation (the screening), a region that the user desires to observe. Consequently, it is possible to expect an effect of reducing the burden of specimen observation (the screening), particularly when there are a plurality of specimens on a slide.

In the second embodiment, the center position of the enlargement processing is varied according to the display control modes. However, the center position of the enlargement processing may be varied according to other methods. For example, when no region of interest is set in a selected individual specimen, the individual specimen may be displayed in enlargement centering on an observation start position or a point coordinate of the individual specimen. When a region of interest is set, the individual specimen may be displayed in enlargement centering on the region of interest. Alternatively, the center position of the enlargement processing may be changed according to operation in selecting an individual specimen. For example, the center position may be changed according to single click (single tap) and double click (double tap) or may be changed according to right button click and left button click. It is also preferable to change the center position when the user points a coordinate while pressing a predetermined key such as a control key and when the user points a coordinate without pressing the predetermined key.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An image processing apparatus includes: an adjusting section configured to detect, when a plurality of observation targets are included in a slide, regions of images of the observation targets from an image of the slide and continuously arrange the regions to thereby generate data of a reconfigured slide image in which arrangement of the observation targets is adjusted; and a display control section configured to display, on a display apparatus, an enlarged image corresponding to a part of a display region of the reconfigured slide image and change the enlarged image displayed on the display apparatus such that the display region moves on the reconfigured slide image according to a movement instruction.

## Claims

1. An image processing apparatus comprising:
an adjusting section configured to detect, when a plurality of observation targets are included in a slide, regions of images of the observation targets from an image of the slide and continuously arrange the regions to thereby generate data of a reconfigured slide image in which arrangement of the observation targets is adjusted; and
a display control section configured to display, on a display apparatus, an enlarged image corresponding to a part of a display region of the reconfigured slide image and change the enlarged image displayed on the display apparatus such that the display region moves on the reconfigured slide image according to a movement instruction.

2. The image processing apparatus according to claim 1, wherein the adjusting section determines arrangement, on the reconfigured slide image, of a pair of the observation targets adjacent to each other on the reconfigured slide image such that a distance between the two observation targets on the reconfigured slide image is shorter compared with the distance therebetween on the actual slide.

3. The image processing apparatus according to claim 1 or 2, wherein the adjusting section determines arrangement of the plurality of observation targets on the reconfigured slide image such that the plurality of observation targets are arranged in order according to given observation orders.

4. The image processing apparatus according to claim 3, wherein, concerning a first observation target and a second observation target adjacent to each other in the observation orders, the adjusting section determines arrangement of the first observation target and the second observation target on the reconfigured slide image such that an enlarged image of the first observation target is directly switched to an enlarged image of the second observation target according to the movement of the display region.

5. The image processing apparatus according to claim 4, wherein
a plurality of enlarged images, display orders of which are set, are associated with each of the observation targets, and
the adjusting section determines the arrangement of the first observation target and the second observation target on the reconfigured slide image such that the enlarged image with the last display order among the plurality of enlarged images of the first observation target and the enlarged image with the first display order among the plurality of enlarged images of the second observation target are joined.

6. The image processing apparatus according to any one of claims 1 to 5, wherein the adjusting section translates the regions of the images of the observation targets or translates and rotates the regions to thereby adjust the arrangement of the observation targets on the reconfigured slide image.

7. The image processing apparatus according to any one of claims 1 to 6, wherein data of the reconfigured slide image is data that defines a correspondence relation between positions of the images of the observation targets in the reconfigured slide image and positions of the images of the observation targets in the actual slide.

8. An image processing apparatus comprising:
an acquiring section configured to acquire a movement instruction for a display region; and
a display control section configured to change a position of the display region and an enlarged image displayed on a display apparatus according to the movement instruction, wherein
when a plurality of observation targets are included in a slide, the display control section moves the display region such that an enlarged image of a certain observation target is directly switched to an enlarged image of another observation target.

9. The image processing apparatus according to any one of claims 1 to 8, wherein, when instructed to select one observation target out of the plurality of observation targets, the display control section moves the display region such that the selected observation target is displayed in enlargement.

10. The image processing apparatus according to claim 9, wherein, when a region of interest is set for the selected observation target, the display control section moves the display region such that a region centering on the region of interest set for the selected observation target is displayed in enlargement.

11. An image processing apparatus for supporting operation for displaying in enlargement a part of a region of a slide including a plurality of observation targets and moving the display region displayed in enlargement to thereby observe the plurality of observation targets in order, the image processing apparatus comprising:
an acquiring section configured to acquire a movement instruction for a display region; and
a display control section configured to change a position of the display region and an enlarged image displayed on a display apparatus according to the movement instruction, wherein
an observation start position where observation is to be started first is set for each of the observation targets, and
when instructed to select one observation target out of the plurality of observation targets, the display control section moves the display region such that a region centering on the observation start position of the selected observation target is displayed in enlargement.

12. An image processing method comprising the steps of:
a computer detecting, when a plurality of observation targets are included in a slide, regions of images of the observation targets from an image of the slide and continuously arranging the regions to thereby generate data of a reconfigured slide image in which arrangement of the observation targets is adjusted; and
the computer displaying, on a display apparatus, an enlarged image corresponding to a part of a display region of the reconfigured slide image and changing the enlarged image displayed on the display apparatus such that the display region moves on the reconfigured slide image according to a movement instruction.

13. An image processing method comprising the steps of:
a computer acquiring a movement instruction for a display region; and
the computer changing a position of the display region and an enlarged image displayed on a display apparatus according to the movement instruction, wherein
when a plurality of observation targets are included in a slide, the computer moves the display region such that an enlarged image of a certain observation target is directly switched to an enlarged image of another observation target.

14. An image processing method for supporting, with a computer, operation for displaying in enlargement a part of a region of a slide including a plurality of observation targets and moving the display region displayed in enlargement to thereby observe the plurality of observation targets in order, the image processing method comprising the steps of:
the computer acquiring a movement instruction for a display region; and
the computer changing a position of the display region and an enlarged image displayed on a display apparatus according to the movement instruction, wherein
an observation start position where observation is to be started first is set for each of the observation targets, and
when instructed to select one observation target out of the plurality of observation targets, the computer moves the display region such that a region centering on the observation start position of the selected observation target is displayed in enlargement.

15. A non-transitory computer readable storage medium storing a program for causing a computer to execute the steps of the image processing method according to any one of claims 12 to 14.
